(19) Europäisches Patentamt / European Patent Office / Office européen des brevets

(11) **EP 3 319 153 A1**

(12) **EUROPEAN PATENT APPLICATION**
published in accordance with Art. 153(4) EPC

(43) Date of publication:
**09.05.2018 Bulletin 2018/19**

(51) Int Cl.:
$H01M\ 4/485$ (2010.01)   $H01G\ 11/06$ (2013.01)
$H01G\ 11/46$ (2013.01)   $H01G\ 11/60$ (2013.01)
$H01G\ 11/62$ (2013.01)   $H01M\ 10/0525$ (2010.01)
$H01M\ 10/0568$ (2010.01)   $H01M\ 10/0569$ (2010.01)

(21) Application number: **16818041.2**

(22) Date of filing: **30.06.2016**

(86) International application number:
**PCT/JP2016/069490**

(87) International publication number:
**WO 2017/002933 (05.01.2017 Gazette 2017/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.06.2015 JP 2015131928**

(71) Applicant: UBE Industries, Ltd.
Ube-shi, Yamaguchi 755-8633 (JP)

(72) Inventors:
• FUJINO, Hiroshi
  Ube-shi
  Yamaguchi 755-8633 (JP)
• MIYOSHI, Kazuhiro
  Ube-shi
  Yamaguchi 755-8633 (JP)
• IWAMOTO, Yasumasa
  Tokyo 105-8449 (JP)

(74) Representative: Gille Hrabal
  Brucknerstrasse 20
  40593 Düsseldorf (DE)

(54) **LITHIUM TITANATE POWDER FOR POWER STORAGE DEVICE ELECTRODE, ACTIVE MATERIAL, AND ELECTRODE SHEET AND POWER STORAGE DEVICE USING SAME**

(57) Provided is a lithium titanate powder for an electrode of an energy storage device containing $Li_4Ti_5O_{12}$ as its main component, wherein, the specific surface area determined by a BET method is $5m^2/g$ or more, as peak intensity obtained by X-ray diffraction measurement of the lithium titanate powder, when a peak intensity that derives from a (111) plane of $Li_{4/3}Ti_{5/3}O_4$ is considered to be 100, a sum of a peak intensity that derives from a (101) plane of anatase-type titanium dioxide, a peak intensity that derives from a (110) plane of rutile-type titanium dioxide, and a value calculated by multiplying 100/80 to a peak intensity that derives from the (-133) plane of $Li_2TiO_3$ is 1 or less, and a ratio 1/10, a ratio of diffraction integrated intensity I of a (111) plane of $Li_4Ti_5O_{12}$ to diffraction integrated intensity 10 of a (111) plane of Si, which are obtained by X-ray diffraction measurement of a lithium titanate powder containing a silicon powder obtained by adding the silicon powder (NIST standard reference material 640d) as an internal standard sample to the lithium titanate powder by 10 mass% in outer percentage, is 5 or more, active material containing the lithium titanate powder, and an energy storage device using the active material.

**Description**

Technical Field

The present invention relates to a lithium titanate powder preferable such as for an electrode material of an energy storage device, an active material using the lithium titanate powder, and an energy storage device using the active material to a positive electrode sheet or negative electrode sheet.

Background Art

Recently, various types of materials have been studied as electrode material for energy storage devices. Among them, lithium titanate is attracting attention for use as an active material of an energy storage device for electric vehicles such as HEV, PHEV, and BEV for its superior input-output performance when used as an active material.

When used as an energy storage device of an electric vehicle, as energy released during slowdown of an electric vehicle is recovered (called "regeneration"), extremely large current instantaneously flows into a battery. For this reason, electrode material having large charge-discharge capacity and with good quick charge characteristics is demanded. More, for use over ten years, it is also required for the energy storage device for an electrode vehicle that its performance does not deteriorate over a long period of time. In summer, temperature inside the vehicle may exceed 60°C. However, when lithium titanate is exposed to a high temperature in a charged state, reaction with electrolytic solution easily proceeds and thus gas is generated. As a result, there is a problem that deterioration in capacity due to expansion of the battery and increase of internal resistance may occur. For this reason, development of lithium titanate with few gas generation amount at high temperature is desired. More, when charge-discharge efficiency of lithium titanate is good, maintenance of capacity balance between positive electrode and negative electrode of the battery becomes easy when charge and discharge is repeated and the battery does not deteriorate easily. Accordingly, the lithium titanate with charge-discharge efficiency is demanded.

In Patent Document 1, when Fd-3m is indexed with an XRD, a lithium titanate particle powder where the $TiO_2$ amount by Rietveld analysis is 1.5% or less, the $Li_2TiO_3$ amount is within a range of 1% or more to 6% or less, the $Li_4Ti_5O_{12}$ amount is within a range of 94% or more to 99% or less, crystal strain is 0.0015 or less, and lithium titanate particle powder with a spinel structure where a specific surface area by the BET method is within a range of 2 $m^2$/g or more to 7 $m^2$/g or less is disclosed. There, it is also disclosed that when the lithium titanate particle powder is used as the negative active material particle powder in a nonaqueous electrolyte secondary battery, initial discharge capacity and output performance become better and also well-balanced battery performance while suppressing gas generation can be obtained. Specifically, Patent Document 1 discloses that a nonaqueous electrolyte secondary battery that uses lithium titanate particle powder where the $TiO_2$ amount is 0 to 0.2%, the $Li_2TiO_3$ amount is within a range of 1.5 to 4.9%, the $Li_4Ti_5O_{12}$ amount is within a range of 95.1 to 98.3%, specific surface area is 2.7 to 6.6 $m^2$/g, and crystal strain is 0.0008 to 0.0012 as negative active material particle powder exhibits high initial charge-discharge capacity, good output performance and few gas generation amount.

Patent Document 2 discloses lithium titanate powder where, when the main peak intensities of $Li_4Ti_5O_{12}$, $Li_2TiO_3$, and $TiO_2$ detected by the X-ray diffraction pattern is $I_1$, $I_2$, and $I_3$ respectively, I1/(I1+I2+I3) is 96% or more, a crystallite diameter of $Li_4Ti_5O_{12}$ calculated from the Scherrer equation from the half-peak width of the peak in the (111) plane of $Li_4Ti_5O_{12}$ is 520Å to 590Å, and specific surface area determined by the BET method is 8 to 12$m^2$/g. There, Patent Document 2 also discloses that a lithium-ion secondary battery containing the lithium titanate powder as the electrode active material indicates high initial discharge capacity and good rate performance. Specifically, Patent Document 2 discloses that a lithium-ion secondary battery containing the lithium titanate powder where $Li_4Ti_5O_{12}/(Li_4Ti_5O_{12}+Li_2TiO_3+TiO_2+Li_2CO_3)$ is within a range of 96.5 to 97%, crystallite diameter is 520 to 588□, specific surface area is 6.1 to 14 $m^2$/g as the electrode active material exhibits high initial capacity and good rate performance.

In Patent Document 3, when a volume surface diameter calculated from the specific surface area determined by the BET method is $D_{BET}$ and crystallite diameter calculated from a half-peak width of a peak of the (111) plane of $Li_4Ti_5O_{12}$ by the Scherrer equation is $D_x$, lithium titanate powder containing $Li_4Ti_5O_{12}$, in which $D_{BET}$ is within a range of 0.1 to 0.6 $\mu$m, $D_x$ is greater than 80 nm, a ratio of $D_{BET}$ to $D_x$, $D_{BET}/D_x$ ($\mu$m/$\mu$m), is 2 or less, and a peak of $Li_2TiO_3$ is not observed in X-ray diffraction measurement, as a main component is disclosed. Also, there is disclosed that an energy storage device, to which the lithium titanate powder is applied to electrode material, has great initial charge-discharge capacity and good input-output performance. Specifically, that an energy storage device to which the lithium titanate powder where $D_{BET}$ is within a range of 0.27 to 0.44 $\mu$m, $D_x$ is within a range of 212 to 412 nm, $D_{BET}/D_x$ ($\mu$m/$\mu$m) is within a range of 1.07 to 1.78 is applied to electrode material has large charge-discharge capacity and good input-output performance is indicated.

In Patent Document 4, regarding average fine-pore size ($\mu$m) and cumulative fine-pore volume (mL/g) from which fine pores resulting from space between particles from fine-pore size distribution measured by a mercury penetration method is eliminated, a lithium titanate agglomerate where the average fine-pore size is within a range of 0.01 $\mu$m to 0.45 $\mu$m and a value of (average fine-pore size)$\times$(cumulative fine-pore volume) is 0.001 or more is disclosed. There, it is also disclosed that an energy storage device to which the lithium titanate agglomerate is applied to electrode material has good electric capacity ratio for quick charge and discharge.

Also, in Patent Document 5, a nonaqueous electrolyte secondary battery including a positive electrode containing an active material represented by $Li_{1\pm\alpha}[Me]O_2 (0\leq\alpha<0.2$, Me is a transition metal including at least one kind selected from a group consisting of Mn, Fe, Co, Ti, and Cu, and Ni) and having a layer structure, and a negative electrode including titanium oxide as the negative electrode active material, and in which practical charge-discharge range is 2.8V and less. There is also disclosed that according to the nonaqueous electrolyte secondary battery, a good high-rate cycle life can be obtained.

Prior Art Document

Patent Document

Patent Document 1: WO 2013/129423

Patent Document 2: JP 2013-95646 A

Patent Document 3: JP 5690029 A

Patent Document 4: JP 2014-24723 A

Patent Document 5: JP 2005-142047 A

Summary of Invention

Problems to be solved by Invention

However, like the lithium titanate powder of Patent Document 1, when an impurity phase like $Li_2TiO_3$ is contained at relatively high ratio, to the secondary battery using the lithium titanate powder, there is a problem that the initial charge-discharge capacity, initial charge-discharge efficiency, and input performance decrease. More, although in Patent Document 2, by reducing the impurity phase ratio in the lithium titanate powder and improving crystallinity of the surface to make crystallite diameter within a predetermined range, initial charge-discharge capacity and rate performance, etc., of the energy storage can be improved, improvement is attempted by milling lithium titanate after calcination and then performing heat treatment to improve crystallinity. Only with the heat treatment, disturbance of the crystal caused by the milling cannot be completely recovered and lithium titanate powder with high crystallinity cannot be obtained, and thus gas generation during high-temperature storage cannot be suppressed. More, like the lithium titanate powder of Patent Document 3, by reducing ratio of the impurity phase and then increasing crystallite diameter relative to the BET particle size, initial charge-discharge capacity and rate performance, etc., of the energy storage device can be improved. However, the improvement is only for crystallinity inside the particle and improvement of crystallinity for the particle surface is failed. Accordingly, gas generation during high-temperature storage cannot be suppressed.

Further, in Patent Document 4, although a lithium titanate agglomerate having haploidization rate within a range of 93 to 95% is disclosed as Example 1 to Example 7, since impurity phases such as $Li_2TiO_3$ and $TiO_2$, other than $Li_4Ti_5O_{12}$ are contained by 5 to 7%, in a secondary battery using the lithium titanate agglomerate, there is a problem that initial charge-discharge capacity, initial charge-discharge efficiency, and input performance decrease. More, in Patent Document 5, although lithium titanate powder is used as the negative electrode active material, nothing is disclosed regarding a point that the lithium titanate powder with what type of structure (for example, crystal structure or the like) should be preferably used. Accordingly, nothing is disclosed regarding information on improvement of initial charge-discharge capacity, initial charge-discharge efficiency, and input performance by the negative electrode active material.

Concerning the above, an objective of the present invention is to provide a lithium titanate powder that exhibits a large initial charge-discharge capacity and initial charge-discharge efficiency, excellent charge rate performance, fewer gas generation amount at high-temperature storage when used as electrode material of an energy storage device, active material containing the lithium titanate powder, and an energy storage device using the active material.

3

Means for solving problems

The present inventors have studied intensively to achieve the above-mentioned objectives, and finally have found a lithium titanate powder with specific surface area of a predetermined value or more, few specific impurity phase, and extremely large X-ray diffraction integrated intensity of $Li_4Ti_5O_{12}$. The inventors have also found that the energy storage device to which the lithium titanate powder is applied to the electrode material exhibits a large initial charge-discharge capacity and initial charge-discharge efficiency, excellent charge rate performance, and fewer gas generation amount at high-temperature storage, and thus completed the invention (the first aspect of the present invention).

Further, the inventors have also found a lithium titanate powder with specific surface area of a predetermined value or more, and when charging operation is performed using the three-electrode cell where the lithium titanate powder is used as the active material for an evaluation electrode of a three-electrode cell, charge capacity until the potential of the evaluation electrode lowers to a predetermined potential becomes smaller than ever before. Furthermore, the inventors have also found that the energy storage device to which the lithium titanate powder is applied to the electrode material has a large initial charge-discharge capacity and initial charge-discharge efficiency, excellent charge rate performance, and few gas generation amount at high-temperature storage, and completed the present invention (the second aspect and third aspect of the present invention).

Accordingly, the present invention relates to the following items.

(1) A lithium titanate powder for an electrode of an energy storage device containing $Li_4Ti_5O_{12}$ as a main component, wherein,

specific surface area determined by a BET method is 5m$^2$/g or more,

as peak intensity obtained by X-ray diffraction measurement of the lithium titanate powder, when a peak intensity that derives from a (111) plane of $Li_{4/3}Ti_{5/3}O_4$ is considered to be 100, a sum of a peak intensity that derives from a (101) plane of anatase-type titanium dioxide, a peak intensity that derives from a (110) plane of rutile-type titanium dioxide, and a value calculated by multiplying 100/80 to a peak intensity that derives from the (-133) plane of $Li_2TiO_3$ is 1 or less, and

a ratio I/I0, a ratio of diffraction integrated intensity I of a (111) plane of $Li_4Ti_5O_{12}$ to diffraction integrated intensity 10 of a (111) plane of Si, which are obtained by X-ray diffraction measurement of a lithium titanate powder containing a silicon powder obtained by adding the silicon powder (NIST standard reference material 640d) as an internal standard sample to the lithium titanate powder by 10 mass% in outer percentage, is 5 or more.

(2) A lithium titanate powder for an electrode of an energy storage device containing $Li_4Ti_5O_{12}$ as a main component, wherein,

specific surface area determined by a BET method is 5 m$^2$/g or more, and

to a three-electrode cell where the lithium titanate powder is used as an active material for an evaluation electrode and lithium foil is used for counter electrode and reference electrode, when a charging operation (here, a case where the current flows in a direction Li is absorbed to the evaluation electrode is considered as charge) is performed at a current of 0.1C until potential of the evaluation electrode becomes 1V (vs Li/Li$^+$) at 0°C from a completely discharged state, which is a state where a discharge operation (here, a case where current flows in a direction Li is released from the evaluation electrode is considered as discharge) is performed at a current of 0.1C until potential of the evaluation electrode becomes 2V (vs Li/Li$^+$), a ratio of a charge capacity until the potential of the evaluation electrode lowers to 1.58V (vs Li/Li$^+$) from the completely discharged state relative to a charge capacity until the potential of the evaluation electrode lowers to 1V(vs Li/Li$^+$) from the completely discharged state is 3% or less.

(3) A lithium titanate powder for an electrode of an energy storage device containing Li4Ti$_5$O$_{12}$ as a main component, wherein,

specific surface area determined by a BET method is 5m$^2$/g or more, and

to a three-electrode cell where the lithium titanate powder is used as an active material for an evaluation electrode and lithium foil is used for counter electrode and reference electrode, when a charging operation (here, a case where current flows in a direction Li is absorbed to the evaluation electrode is considered as charge) is performed at a current of 0.1C until potential of the evaluation electrode becomes 1V (vs Li/Li$^+$) at 25°C from a completely discharged state, which is a state where a discharge operation (here, a case where the current flows in a direction Li is released from the evaluation electrode is considered as discharge) is performed at a current of 0.1C until the potential of the evaluation electrode becomes 2V (vs Li/Li$^+$), after repeating a cycle of charging the three-electrode cell at a current of 1C until the potential of the evaluation electrode becomes 1V (vs Li/Li$^+$) and discharging the three-electrode cell at a current of 1C until the potential of the evaluation electrode becomes 2V (vs Li/Li$^+$) at 60°C for 100 times, a ratio of a charge capacity until the potential of the evaluation electrode lowers to 1.6V (vs Li/Li$^+$) from the completely discharged state relative to a charge capacity until the potential of the evaluation electrode lowers to 1V (vs Li/Li$^+$) from the completely discharged state is 3% or less.

(4) The lithium titanate powder for an electrode of an energy storage device according to (1) or (3), wherein,

to a three-electrode cell where the lithium titanate powder is used as an active material for an evaluation electrode and lithium foil is used for counter electrode and reference electrode, when a charging operation (here, a case where the current flows in a direction Li is absorbed to the evaluation electrode is considered as charge) is performed at a current of 0.1C until potential of the evaluation electrode becomes 1V (vs Li/Li$^+$) at 0°C from a completely discharged state, which is a state where a discharge operation (here, a case where current flows in a direction Li is released from the evaluation electrode is considered as discharge) is performed at a current of 0.1C until potential of the evaluation electrode becomes 2V (vs Li/Li$^+$), a ratio of a charge capacity until the potential of the evaluation electrode lowers to 1.58V (vs Li/Li$^+$) from the completely discharged state relative to a charge capacity until the potential of the evaluation electrode lowers to 1V (vs Li/Li$^+$) from the completely discharged state is 3% or less.

(5) The lithium titanate powder for an electrode of an energy storage device according to (1) or (2), wherein, to a three-electrode cell where the lithium titanate powder is used as an active material for an evaluation electrode and lithium foil is used for counter electrode and reference electrode, when a charging operation (here, a case where current flows in a direction Li is absorbed to the evaluation electrode is considered as charge) is performed at a current of 0.1C until potential of the evaluation electrode becomes 1V (vs Li/Li$^+$) at 25°C from a completely discharged state, which is a state where a discharge operation (here, a case where the current flows in a direction Li is released from the evaluation electrode is considered as discharge) is performed at a current of 0.1C until the potential of the evaluation electrode becomes 2V (vs Li/Li$^+$), after repeating a cycle of charging the three-electrode cell at a current of 1C until the potential of the evaluation electrode becomes 1V (vs Li/Li$^+$) and discharging the three-electrode cell at a current of 1C until the potential of the evaluation electrode becomes 2V (vs Li/Li$^+$) at 60°C for 100 times, a ratio of a charge capacity until the potential of the evaluation electrode lowers to 1.6V (vs Li/Li$^+$) from the completely discharged state relative to a charge capacity until the potential of the evaluation electrode lowers to 1V (vs Li/Li$^+$) from the completely discharged state is 3% or less.

(6) The lithium titanate powder for an electrode of an energy storage device according to any one of (1) to (5), wherein specific surface area determined by the BET method is 20 m$^2$/g or more.

(7) The lithium titanate powder for an electrode of an energy storage device according to any one of (1) to (6), wherein a crystallite diameter $D_x$ calculated from a half-peak width of a (111) plane of $Li_4Ti_5O_{12}$ by the Scherrer equation is 70 nm or more.

(8) The lithium titanate powder for an electrode of an energy storage device according to (7), wherein when a volume surface diameter calculated from specific surface area determined by a BET method is considered to be $D_{BET}$, a ratio of the volume surface diameter $D_{BET}$ to the crystallite diameter $D_x$, $D_{BET}/D_x$ ($\mu$m/$\mu$m), is 2 or less.

(9) An active material comprising the lithium titanate powder for an electrode of an energy storage device according to any one of (1) to (8).

(10) An electrode sheet for an energy storage device comprising the active material according to (9).

(11) An energy storage device comprising the electrode sheet according to (10).

(12) A lithium-ion secondary battery comprising the active material according to (9).

(13) A hybrid capacitor comprising the active material according to (9).

(14) The energy storage device according to (11), wherein a non-aqueous electrolyte solution where electrolyte salt including at least one kind of lithium salt selected from $LiPF_6$, $LiBF_4$, $LiPO_2F_2$, and $LiN(SO_2F)_2$ is dissolved to a nonaqueous solvent including one kind or more cyclic carbonates selected from ethylene carbonate, propylene carbonate, 1,2-butylene carbonate, 2,3-butylene carbonate, 4-fluoro-1,3-dioxolane-2-one, and 4-ethynyl-1,3-dioxolane-2-one is used.

(15) The energy storage device according to (14), wherein the non-aqueous electrolyte solution has a concentration of all electrolyte salts of 0.5M or more and 2.0M or less, includes at least $LiPF_6$ as electrolyte salt, and further includes at least one kind of lithium salt selected from $LiBF_4$, $LiPO_2F_2$, and $LiN(SO_2F)_2$ within a range of 0.01M or more and 0.4M or less.

(16) The energy storage device according to (14) or (15), wherein the nonaqueous solvent further includes one or more kinds of symmetrically chain carbonates selected from dimethyl carbonate, diethyl carbonate, dipropyl carbonate, and dibutyl carbonate, and one or more kinds of asymmetrically chain carbonates selected from methyl ethyl carbonate, methyl propyl carbonate, methyl isopropyl carbonate, methyl butyl carbonate, and ethyl propyl carbonate.

Effect of Invention

Accordance to the present invention, a lithium titanate powder suitable for use as electrode material for an energy storage device having a large initial charge-discharge capacity and initial charge-discharge efficiency, excellent charge rate performance, and also, with large specific area and high reactivity, but few gas generation amount at high-temperature storage, an active material, and an energy storage device are provided.

Brief Description of Drawings

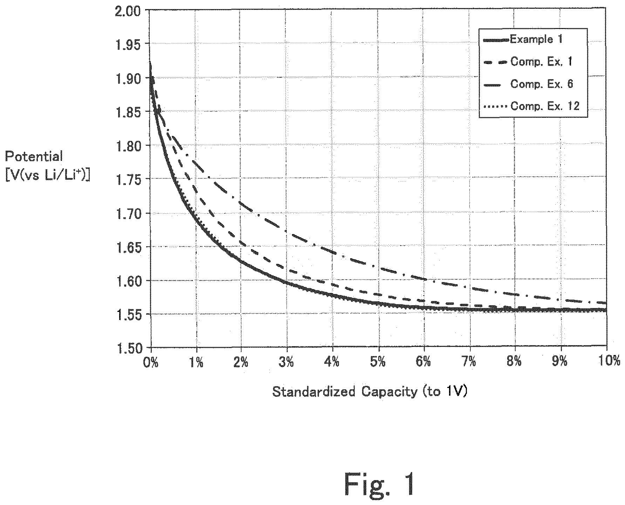

Fig. 1 illustrates a relationship, between potential of the evaluation electrode (vs Li/Li$^+$) and standardized capacity ("charge capacity of the three-electrode cell from a completely discharged state until the potential of the evaluation electrode lowers to 1.6V (vs Li/Li$^+$) "/"charge capacity of the three-electrode cell from the completely discharged state until the potential of the evaluation electrode lowers to 1V (vs Li/Li$^+$)" when the three-electrode cell used in the present invention (Example 1, Comparative Examples 1, 6, and 12) is charged at a current of 0.1C at 25°C from the completely discharged state, that is a state the three-electrode cell is discharged by a current of 0.1C until the potential reaches 2V (vs Li/Li$^+$), when a direction in which Li is absorbed to the evaluating electrode is considered as charging.

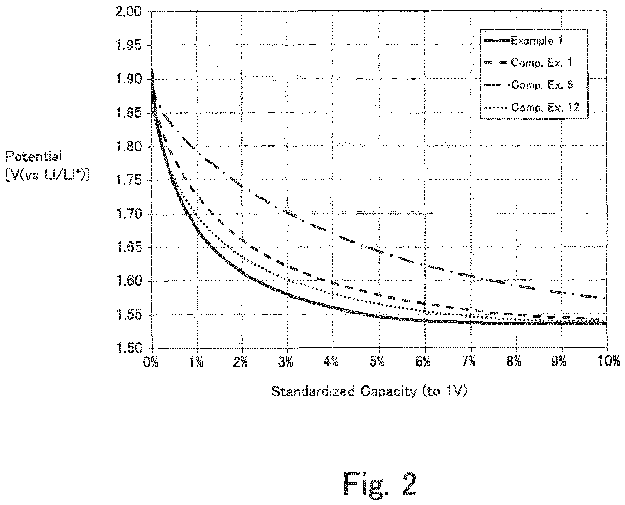

Fig. 2 illustrates a relationship, between potential of the evaluation electrode (vs Li/Li$^+$) and standardized capacity ("charge capacity of the three-electrode cell from a completely discharged state until the potential of the evaluation electrode lowers to 1.58V (vs Li/Li$^+$)"/"charge capacity of the three-electrode cell from the completely discharged state until the potential of the evaluation electrode lowers to 1V (vs Li/Li$^+$)" when the three-electrode cell used in the present invention (Example 1, Comparative Examples 1, 6, and 12) is charged at a current of 0.1C at 0°C from the completely discharged state, that is a state the three-electrode cell is discharged by a current of 0.1C until the potential reaches 2V (vs Li/Li$^+$), when a direction in which Li is absorbed to the evaluating electrode is considered as charging.

Modes for Carrying out the Invention

[Lithium titanate powder of the first aspect and second aspect of the present invention]

The lithium titanate powder of the first aspect of the present invention is a lithium titanate powder for an electrode of an energy storage device containing $Li_4Ti_5O_{12}$ as a main component, wherein, specific surface area determined by a BET method is 5m$^2$/g or more, and as to the peak intensity obtained by X-ray diffraction measurement of the lithium titanate powder, when a peak intensity that derives from a (111) plane of $Li_{4/3}Ti_{5/3}O_4$ is considered to be 100, a sum of a peak intensity that derives from a (101) plane of anatase-type titanium dioxide, a peak intensity that derives from a (110) plane of rutile-type titanium dioxide, and a value calculated by multiplying 100/80 to a peak intensity that derives from a (-133) plane of $Li_2TiO_3$ is 1 or less, and a ratio 1/10, a ratio of diffraction integrated intensity I of a (111) plane of $Li_4Ti_5O_{12}$ to diffraction integrated intensity 10 of a (111) plane of Si, which are obtained by X-ray diffraction measurement of a lithium titanate powder containing a silicon powder obtained by adding the silicon powder (NIST standard reference material 640d) as an internal standard sample to the lithium titanate powder by 10 mass% in outer percentage, is 5 or more.

More, the lithium titanate powder of the second aspect of the present invention is a lithium titanate powder for an electrode of an energy storage device containing $Li_4Ti_5O_{12}$ as a main component, and specific surface area determined by a BET method is 5 m$^2$/g or more. To a three-electrode cell where the lithium titanate powder is used as an active material for an evaluation electrode and lithium foil is used for counter electrode and reference electrode, when a charging operation (here, a case where the current flows in a direction Li is absorbed to the evaluation electrode is considered as charge) is performed at a current of 0.1C until potential of the evaluation electrode becomes 1V (vs Li/Li$^+$) at 0°C from a completely discharged state, which is a state where a discharge operation (here, a case where current flows in a direction Li is released from the evaluation electrode is considered as discharge) is performed at a current of 0.1C until potential of the evaluation electrode becomes 2V (vs Li/Li$^+$), a ratio of a charge capacity until the potential of the evaluation electrode lowers to 1.58V (vs Li/Li$^+$) from the completely discharged state relative to a charge capacity until the potential of the evaluation electrode lowers to 1V(vs Li/Li$^+$) from the completely discharged state is 3% or less.

Here, containing $Li_4Ti_5O_{12}$ as the main component means, when the peak intensity that corresponds to the main peak of $Li_4Ti_5O_{12}$ among the peaks measured by the X-ray diffraction analysis is considered as 100, that a total of the main peak intensities of other detected phases is 5 or less. Since the initial discharge capacity of the energy storage device tends to become high when such components other than $Li_4Ti_5O_{12}$ are few, the amount of such components other than $Li_4Ti_5O_{12}$ are preferably few, and 3 or less is particularly preferable. Also, in the lithium titanate powder of the second aspect of the present invention, vs Li/Li$^+$ in potential of the evaluation electrode means the potential on the basis of Li/Li$^+$ equilibrium potential of the evaluation electrode when Li reference electrode is used. Further, in the lithium titanate powder of the second aspect of the present invention, the direction in which Li is released from the evaluation electrode is considered as discharge, the direction in which Li is absorbed to the evaluation electrode is considered as charge, and the completely discharged state means the state where substantially no Li is absorbed to the evaluation electrode. In the three-electrode cell of the present invention, for example, by discharging at a current of 0.1C until the potential reaches 2V (vs Li/Li$^+$), it can be made to the completely discharged state.

(Common matter in the lithium titanate powder of the first aspect and lithium titanate powder of the second aspect)

In the following, common matter in the lithium titanate powder of the first aspect of the present invention and the lithium titanate powder of the second aspect of the present invention will be explained.

In the lithium titanate powder of the present invention, Li/Ti, an atomic ratio of Li to Ti is preferably 0.79 to 0.85. When the atomic ratio is within this range, the ratio of $Li_4Ti_5O_{12}$ in the lithium titanate powder increases and the initial charge-discharge capacity of an energy storage device where the lithium titanate powder of the present invention is applied to electrode material increases. From this point of view, the atomic ratio Li/Ti is preferably 0.79 to 0.84 and more preferably 0.79 to 0.83.

<Specific surface area>

The lithium titanate powder of the present invention has the specific surface area determined by a BET method of 5 $m^2$/g or more. When the specific surface area is 5 $m^2$/g or more, there is no risk of rapid decrease in charge rate performance, and from the point of improving charge rate performance, the specific surface area is preferably 15 $m^2$/g or more and more preferably 20 $m^2$/g or more. On the other hand, although the upper limit of the specific surface area is not particularly limited, it is preferable when the specific surface area is 50 $m^2$/g or less as gas generation at high-temperature storage can be suppressed, and 40 $m^2$/g or less is more preferable, and 30 $m^2$/g or less is particularly preferable.

<Volume-median particle diameter D50>

The lithium titanate powder of the present invention can be either powder obtained without granulation operation or powder obtained after granulation operation performed before or after calcination. If it is a powder obtained without granulation operation, the volume-median particle diameter (or average particle size, hereafter indicated as D50) of the lithium titanate powder of the present invention is preferably 0.01 to 2 $\mu$m. In order to suppress aggregation of the lithium titanate powder and to improve its handling during manufacture of an electrode, D50 of the lithium titanate powder of the present invention obtained without granulation is more preferably 0.05 $\mu$m or more, and preferably 1 $\mu$m or less to improve 50C charge rate characteristics of the energy storage device. From these points, D50 of the lithium titanate powder of the present invention obtained without granulation operation is more preferably 0.05 to 1 $\mu$m, and further preferably 0.1 to 0.9 $\mu$m. On the other hand, if it is the powder obtained after granulation operation, D50 of the lithium titanate powder in the present invention is preferably 50 $\mu$m or less. Here, D50 indicates a particle diameter where a volume cumulative frequency calculated in volume fraction becomes 50% when integrated from smaller particles. Its measurement method is explained later in examples.

<Crystallite diameter $D_x$>

In the present invention, a crystallite diameter calculated from a half-peak width of the peak of (111) plane of $Li_4Ti_5O_{12}$ of the lithium titanate powder of the present invention by the Scherrer equation is represented as $D_x$. $D_x$ of the lithium titanate powder in the present invention is preferably 70 nm or more, more preferably more than 70 nm, further preferably 80 nm or more, further more preferably 100 nm or more, and particularly preferably 200 nm. When $D_x$ becomes less than 70 nm, reaction becomes extremely large and the amount of gas generation at high-temperature storage may become enormous. Further, $D_x$ of the lithium titanate powder is preferably 500 nm or less. When $D_x$ becomes larger than 500 nm, $D_{BET}$, which is a volume surface diameter calculated from the specific surface area determined by the BET method may increase and may result in inferior input-output performance. The measurement method for $D_x$ is explained in detail in examples.

<A ratio of $D_{BET}$ to $D_X$, $D_{BET}/D_X$ ($\mu$m/$\mu$m)>

In the present invention, a BET diameter, a volume surface diameter of the lithium titanate powder calculated from the specific surface area determined by the BET method is represented as $D_{BET}$. The measurement method of $D_{BET}$ is described in detail in examples. A ratio of $D_{BET}$ to $D_X$ of the lithium titanate powder of the present invention, $D_{BET}/D_X$ ($\mu$m/$\mu$m), is preferably 2 or less, and particularly preferably 1.5 or less. As $D_{BET}/D_X$ becomes small, input-output performance of an energy storage device to which the lithium titanate powder of the present invention is applied becomes better. More, the lower limit of $D_{BET}/D_X$ is not particularly limited, however 0.6 or more in general.

In the above, the common matter to the lithium titanate powder of the first aspect and the lithium titanate powder of the second aspect have been explained. The above matter can be similarly applied to the lithium titanate powder of the third aspect described later.

(Lithium titanate powder of the first aspect)

Next, the lithium titanate powder of the first aspect of the present invention will be explained.

<Ratio of a certain impurity phase>

In the lithium titanate powder of the first aspect of the present invention, regarding the peak intensity obtained by the X-ray diffraction measurement, when the peak intensity that derives from the (111) plane of $Li_4Ti_5O_{12}$ is considered as 100, the sum of the peak intensity that derives from the (101) plane of anatase-type titanium dioxide, peak intensity that derives from the (110) plane of rutile-type titanium dioxide, and the value calculated by multiplying 100/80 to peak intensity that derives from the (-133) plane of $Li_2TiO_3$, which correspond to the peak intensity of the (002) plane of $Li_2TiO_3$, is 1 or less.

Each of the peak that derives from the (111) plane of $Li_4Ti_5O_{12}$, the peak that derives from the (101) plane of anatase-type titanium dioxide, the peak that derives from the (110) plane of rutile-type titanium dioxide, and the peak that derives from the (002) plane of $Li_2TiO_3$ obtained by X-ray diffraction measurement is the main peak of each crystal phase. In the present invention, only for $Li_2TiO_3$, a value calculated by multiplying 100/80 to the peak intensity that derives from the (-133) plane of $Li_2TiO_3$ is used instead of the peak that derives from the (002) plane that is the main peak of $Li_2TiO_3$ and the value is used as the peak intensity that corresponds to the (002) plane which is the main peak of $Li_2TiO_3$. The reason why this is performed is because although the peak that derives from the (002) plane, that is the main peak of $Li_2TiO_3$, overlaps with skirts of the peak that derives from the (111) plane of $Li_{4/3}Ti_{5/3}O_4$ and thus peak separation processing is required, and the peak that derives from the (-133) plane of $Li_2TiO_3$ does not overlap with peaks of other constituent phases so that intensity that corresponds to the main peak of $Li_2TiO_3$ can be calculated more easily. More, the reason why 100/80 is multiplied is based on the peak intensity ratio thereof.

Regarding the peak intensity obtained from the X-ray diffraction measurement, when the peak intensity that derives from the (111) plane of $Li_4Ti_5O_{12}$ is considered as 100, the sum of the peak intensity that derives from the (101) plane of anatase-type titanium dioxide, the peak intensity that derives from the (110) plane of rutile-type titanium dioxide, and the peak intensity that corresponds to the (002) plane of $Li_2TiO_3$ calculated by multiplying 100/80 to the peak intensity that derives from the (-133) plane of $Li_2TiO_3$ is preferably 0.9 or less, more preferably 0.8 or less, and although its lower limit is not particularly limited, it is generally 0 or more.

<Ratio of X-ray diffraction integrated intensity between the (111) plane of $Li_4Ti_5O_{12}$ and internal standard sample>

Additionally, in the lithium titanate powder of the first aspect of the present invention, a ratio of diffraction integrated intensity I of the (111) plane of $Li_4Ti_5O_{12}$ to diffraction integrated intensity 10 of the (111) plane of Si, or I/I0, which are obtained by X-ray diffraction measurement of the lithium titanate powder containing silicon powder obtained by adding silicon powder (NIST standard reference material 640d) to the lithium titanate powder by 10 mass% in outer percentage as an internal standard sample, is 5 or more. The ratio I/I0 is a parameter representing crystallinity of $Li_4Ti_5O_{12}$ constituting the lithium titanate powder. It is surmised that I/I0 does not become 5 or more unless crystallinity of the entire particle of the lithium titanate powder becomes extremely high, that is, in addition to crystallinity of the entire inner particle that becomes generally high, also on the particle surface whose crystallinity is generally bad needs to be high like the crystallinity of the inner particle.

The reason why the lithium titanate powder of the first aspect of the present invention with I/I0 of 5 or more not only has a large charge-discharge capacity and initial charge-discharge efficiency, and excellent charge rate performance but also can suppress gas generation during high-temperature storage is because, although it is only a speculation, crystallinity inside the entire particle in addition to the particle surface is extremely high more than ever before, the amount of a certain impurity phase which exist in the vicinity of the particle surface in most cases is few that there exists almost no reaction activating points on the particle surface.

As to the lithium titanate powder of the first aspect of the present invention, I/I0 is preferably 5.1 or more, more preferably 5.3 or more, and the upper limit thereof is, although not particularly limited, 8 or less in general.

(Lithium titanate powder of the second aspect)

Next, the lithium titanate powder of the second aspect of the present invention will be described.

The lithium titanate powder of the second aspect of the present invention is the lithium titanate powder containing $Li_4Ti_5O_{12}$ as the main component, and its specific surface area determined by the BET method is 5 $m^2$/g or more. To a three-electrode cell where the lithium titanate powder is used as an active material of an evaluation electrode and a lithium foil is used for counter electrode and reference electrode, when charging operation (here, a case where the current flows in the direction Li is absorbed to the evaluation electrode is considered as charge) is performed at a current of 0.1C until potential of the evaluation electrode becomes IV (vs Li/Li$^+$) at 0°C from a completely discharged state (here, a case where the current flows in the direction Li is released from the evaluation electrode is considered as discharge), which is the state where discharging operation is performed with a current of 0.1C until the potential of the evaluation electrode becomes 2V (vs Li/Li$^+$), the ratio of the charge capacity of the three electrode cell that the potential of the evaluation electrode lowers to 1.58V (vs Li/Li$^+$) from the completely discharged state relative to the charge capacity of the three-electrode cell that the potential of the evaluation electrode lowers to 1V (vs Li/Li$^+$) from the completely discharged state is 3% or less.

Characteristics of the lithium titanate powder of the second aspect of the present invention becomes clear by determining a ratio of charge capacity of the cell until potential of the evaluation electrode lowers to 1.58V (vs Li/Li$^+$) from the completely discharged state relative to charge capacity of a cell until potential of the evaluation electrode lowers to 1V (vs Li/Li$^+$) from a completely discharged state at 0°C. In other words, although a difference is not clearly seen in ratio of crystallinity of Li$_4$Ti$_5$O$_{12}$ and ratio of certain impurity phase in the vicinity of particle surface of the lithium titanate powder at a room temperature, it is surmised that by appearing as a difference in diffusibility of Li ions at a temperature as low as 0°C, characteristics at the start of charging appear particularly clear.

More, the lithium titanate powder of the second aspect of the present invention is the lithium titanate powder containing Li$_4$Ti$_5$O$_{12}$ as the main component, and its specific surface area determined by the BET method is 5 m$^2$/g or more, and there is no particular limitation as long as the one having the above characteristics when made into an evaluation electrode. As one example, according to the lithium titanate powder of the first aspect of the present invention, by using the lithium titanate powder in the evaluation electrode, by performing measurement prescribed in the second aspect above, requirements prescribed in the second aspect above are satisfied. Particularly, the lithium titanate powder of the first aspect is, as prescribed in the second aspect, the one that can be specified by the charge capacity up to a certain potential at a certain low temperature of the cell to which the lithium titanate powder is used as the active material. However, the lithium titanate powder of the second aspect of the present invention is not particularly limited to the lithium titanate powder of the first aspect of the present invention described above. More, such lithium titanate powder of the second aspect of the present invention, like the lithium titanate powder of the first aspect of the present invention, has large charge-discharge capacity and initial charge-discharge efficiency, excellent in charge rate performance, and more, the amount of gas generation at high-temperature storage becomes few. Additionally, the three-electrode cell and measurement of charge capacity of the three-electrode cell are described in detail in examples.

As to the lithium titanate powder of the second aspect of the present invention, a ratio of the charge capacity of a cell that the potential of the evaluation electrode lowers to 1.58V (vs Li/Li$^+$) from a completely discharged state relative to the charge capacity of the cell until the potential of the evaluation electrode lowers from a completely discharged state to 1V (vs Li/Li$^+$) at 0°C is preferably 2.9% or less, more preferably 2.6% or less, and the lower limit thereof is, although not limited, 1% or more in general.

(Lithium titanate powder according to the third aspect)

Additionally, according to the present invention, as the lithium titanate powder having large initial charge-discharge capacity and initial charge-discharge efficiency, excellent in charge rate performance, and the amount of gas generation at high-temperature storage is few when the lithium titanate powder is applied to the electrode material to an energy storage device, the lithium titanate powder according to the third aspect described in the following can be also provided.

In other words, the lithium titanate powder according to the third aspect of the present invention is the lithium titanate powder containing Li$_4$Ti$_5$O$_{12}$ as the main component, specific surface area determined by the BET method is 5m$^2$/g or more, and to a three-electrode cell where the lithium titanate powder is used as an active material for an evaluation electrode and lithium foil is used for a counter electrode and reference electrode, when charging operation (here, a case where the current flows in the direction Li is absorbed to the evaluation electrode is considered as charge) is performed to the three-electrode cell at a current of 0.1C until the potential of the evaluation electrode becomes 1V (vs Li/Li$^+$) at 25°C from a completely discharged state, which is a state where discharging operation (here, a case where the current flows in the direction Li is released from the evaluation electrode is considered as discharge) is performed to the three-electrode cell at a current of 0.1C until the potential of the evaluation electrode becomes 2V (vs Li/Li$^+$), after repeating a cycle of charging at a current of 1C until the potential of the evaluation electrode becomes 1V (vs Li/Li$^+$) and discharging at a current of 1C until the potential of the evaluation electrode becomes 2V (vs Li/Li$^+$) at 60°C for 100 times, a ratio of the charge capacity of the three-electrode cell until the potential of the evaluation electrode lowers to 1.6V (vs Li/Li$^+$) from the completely discharged state relative to the charge capacity of the three-electrode cell until the potential of the evaluation electrode lowers to 1V(vs Li/Li$^+$) from the completely discharged state is 3% or less.

The characteristics of the lithium titanate powder of the third aspect of the present invention become clear by determining, after cycle testing at 60°C, a ratio of the charge capacity of the cell at 25°C until the potential of the evaluation electrode lowers to 1.6V (vs Li/Li$^+$) from the completely discharged state relative to the charge capacity of the cell until the potential of the evaluation electrode lowers to 1V (vs Li/Li$^+$) from the completely discharged state, which is a state discharge is performed at a current of 0.1C until the potential of the evaluation electrode becomes 2V (vs Li/Li+). As to the lithium titanate powder of the third aspect of the present invention, change in crystal structure (lowering of crystallinity) by severe high-temperature cycle testing for 100 times at 60°C hardly occurs due to particularly high crystallinity of Li$_4$Ti$_5$O$_{12}$ in the vicinity of the particle surface of the lithium titanate powder and low ratio of a certain impurity phase. As a result, it can be surmised that deterioration of diffusibility of Li ions is suppressed and becomes apparent in the characteristics at the start of charging at 25°C after high-temperature cycle testing at 60°C for 100 times.

Further, the lithium titanate powder of the third aspect of the present invention is the lithium titanate powder containing Li$_4$Ti$_5$O$_{12}$ as the main component, the specific surface area determined by the BET method is 5 m$^2$/g or more, and there is no particular limitation as long as the one having the above characteristics when made into an evaluation electrode. To provide an example, according to the lithium titanate powder of the first aspect of the present invention described above, by using the lithium titanate powder of the first aspect as the evaluation electrode and by performing the measurement prescribed in the third aspect above, conditions prescribed in the third aspect above are satisfied.

In the lithium titanate powder of the third aspect of the present invention, a ratio of charge capacity of a cell at 25°C, after a cycle test at 60°C, from a completely discharged state until the potential of the evaluation electrode lowers to 1.6V (vs Li/Li$^+$) relative to charge capacity of a cell until the potential of the evaluation electrode lowers to 1V (vs Li/Li$^+$) from the completely discharged state, which is a state discharging operation is performed with a current of 0.1C until the potential becomes 2V (vs Li/Li$^+$), is preferably 2.9% or less, more preferably 2.6% or less, and the lower limit thereof is, although not particularly limited, 1% or more in general.

[Method of preparing the lithium titanate powder of the present invention]

In the following, an example of the preparation method for the lithium titanate powder (the lithium titanate powder of the first aspect, lithium titanate powder of the second aspect, and lithium titanate powder of the third aspect) of the present invention will be explained. As for the preparation method of the lithium titanate powder of the present invention, although there is no particular limitation, it is preferable to adopt a preparation method where calcination is performed under a condition crystallization goes easily but a particle hardly grows after making raw material to a easily-reacting state, and then cooling is performed under a condition that does not lower crystallinity of the particle surface. Specifically, the preparation method preferably includes a process of milling and mixing the raw material to a certain state, a process of calcination at high temperature in short time (short-time high-temperature), a process of cooling the calcined object at a certain cooling speed, and a postprocessing process such as deagglomeration, classification, and magnetic separation performed as required.

When raw materials are simply mixed, reaction does not proceed sufficiently in short-time high-temperature calcination, thus impurity phases such as Li$_2$TiO$_3$ and rutile-type titanium dioxide are generated in the obtained lithium titanate powder. As these different phases cause decrease in charge-discharge capacity, it is necessary to sufficiently mill and mix Ti source and Li source of raw materials (titanium compound and lithium compound) in order to obtain a lithium titanate powder with less impurity phases by short-time high-temperature calcination

The lithium titanate powder of the present invention can be obtained by making the raw materials to a certain state by sufficiently milling and mixing the raw materials to a certain state so that reaction between the raw materials becomes easy, and then calcining at high temperature in short time (short-time high-temperature) and cooling in a certain atmosphere and temperature drop rate. By cooling in a certain atmosphere and at a temperature drop rate after calcination, the lithium titanate powder of the present invention can keep crystallinity of the particle surface high, and by calcining at high temperature in short time (short-time high-temperature) after making the raw materials to an easy-reacting state, milling is not required after calcination and thus crystallinity of the particle surface does not lower by milling.

In the following, an example of the method for preparing the lithium titanate powder of the present invention is described while dividing into preparation process of raw material, calcination process, and post-process such as deagglomeration, classification, magnetic separation, etc., however, the preparation method of the lithium titanate powder of the present invention is not limited to the same.

<Raw material preparation process>

Raw materials of the lithium titanate powder of the present invention include titanium raw material and lithium raw material. As the titanium raw material, titanium compounds such as anatase-type titanium dioxide and rutile-type titanium dioxide are used. It is preferable that they easily react with lithium raw material in a short time, and from such viewpoint, anatase-type titanium dioxide is preferable. As to the volume-median particle diameter of the titanium raw material (average particle size, D50), 2 μm or less is preferable in order to ensure sufficient reaction of raw materials in a short time calcination.

As the lithium raw material, lithium compounds such as lithium hydroxide monohydrate, lithium oxide, lithium hydrogencarbonate, and lithium carbonate are used.

In order to improve crystallinity of the lithium titanate powder, in addition to the raw materials above, fusing agent (flux) may be added. As the flux, there is no particular limitation as long as the one generally used to the lithium titanate powder is used, however, the one that does not remain in the lithium titanate powder after calcination, or even when remained in the lithium titanate powder, when the used as the active material of an energy storage device, a composition and the addition amount that do not affect performance of the energy storage device should be preferably used. Calcination temperature for the lithium titanate of the present invention is 800°C or more. Accordingly, a melting point of the flux is preferably 800°C or less, for example, such as boric acid, boron oxide, and sodium tetraborate, etc., may be used, but boric acid is particularly preferable. From the point of not lowering charge-discharge capacity, the addition amount should preferably be 0.1 mass% or less in ratio relative to the titanium raw material, more preferably 0.05 mass% or less, and particularly preferably 0.01 mass% or less. More, in order to improve crystallinity of the lithium titanate powder, the addition amount is preferably 0.001 mass% or more relative to the titanium raw material, and more preferably 0.003 mass% or more, and particularly preferably 0.005 mass% or more.

In the present invention, a mixture containing the above raw materials is preferably prepared in such a manner that D95 in a particle size distribution curve of the mixed powder constituting the mixture measured by a laser diffraction/scattering type particle size measuring device becomes 5 $\mu$m or less before calcination. From the viewpoint of increasing the specific surface area, D95 is more preferably 1 $\mu$m or less, further preferably 0.7 $\mu$m or less, and particularly preferably 0.5 $\mu$m or less. More, in order to make the crystallite diameter greater than 70 nm, D95 is preferably 0.4 $\mu$m or more. Here, D95 means the particle diameter where volume cumulative frequency calculated in volume fraction becomes 95% when integrated from smaller particles. The mixture can be a mixed powder prepared as above, or a granulated powder obtained by granulation of the mixed powder prepared as above. Further, the mixture for calcination can be in a form of mixed powder or granulated powder above. If the mixture is a granulated powder, D95 of the granulated powder does not need to be 5 $\mu$m or less but preferably the granulated powder obtained by granulating the mixed powder has D95 of 5 $\mu$m or less.

For a preparation method of a mixture, the following methods can be adopted. The first method is where the compounded raw materials are mixed and milled simultaneously. The second method is where each raw material is milled until its D95 after mixing becomes 5 $\mu$m or less and then either simply mixed or mixed with light milling. The third method is where a powder containing fine particle is prepared by the method such as by crystallization of each raw material, classified as required, and then simply mixed or mixed with slight milling. Among these methods, the first method where the raw materials are milled and mixed simultaneously is industrially beneficial as it has fewer processes. Further, a conductive agent may be added at the same time.

If the obtained mixture is a mixed powder, it can be used for the next calcination process as it is. If the obtained mixture is mixed slurry containing the mixed powder, then it can be used for the next calcination process after having dried and granulated with a spray dryer or the like. If a rotary kiln is used for calcination, then the mixed slurry can be used as it is.

<Calcination process>

Next, the mixture is subjected to calcination. In perspective of making the total fine-pore volume of the powder obtained by calcination larger and the crystallite diameter larger, preferably calcination is performed in a short-time high-temperature. From this viewpoint, the maximum temperature during calcination is preferably 1,000 °C or less, more preferably 950 °C or less, and further preferably 900 °C or less. From the viewpoint of reducing ratio of a certain impurity phase and also raising crystallinity of lithium titanate, the maximum temperature during calcination is preferably 800°C or more and more preferably 820°C or more. Similarly, from the viewpoint above, a time for retaining the maximum temperature during calcination is preferably 2 to 60 minutes, more preferably 5 to 45 minutes, and further preferably 5 to 30 minutes. If the maximum temperature during calcination is high, a shorter retaining time is preferably selected. Likewise, from the viewpoint of making the crystallite diameter larger, in a heat-up process during calcination, it is preferable to make the length of time stayed within the 700 to 800 °C range particularly short, for example, 15 minutes or less. In order to make $D_{BET}/D_x$ ($\mu$m/$\mu$m) 2 or less, it is preferable to make the length of time stayed within 700 to 800°C within 10 minutes.

The calcination method is not particularly limited, as long as it can be calcined in the above conditions. As for the calcination method, a fixed-bed furnace, a roller-hearth kiln, a mesh-belt kiln, a fluidized-bed furnace, and a rotary kiln can be used. However, to perform calcination efficiently in a short time, a roller-hearth kiln, a mesh-belt kiln, or a rotary kiln is preferable. If a roller-hearth kiln or mesh-belt kiln in which a mixture is stored in a saggar for calcination is used, the amount of mixture contained in the saggar is preferably kept small in order to keep the lithium titanate quality stable, which is possible by keeping temperature distribution of the mixture uniform during calcination.

The rotary kiln is particularly preferable for manufacturing the lithium titanate powder of the present invention in the point that no containers are required for storing the mixture so that mixture can be added continuously, and that homogenous lithium titanate powder can be obtained by uniform heat history to the calcined object.

There is no particular limitation to the calcination atmosphere in any calcination furnaces as long as desorbed water and carbon dioxide can be eliminated from the atmosphere. Generally, an atmosphere with compressed air is used, however, oxygen, nitrogen, or hydrogen atmosphere, etc., may be used.

<Cooling process>

Next, the obtained calcined object is cooled. In order to raise crystallinity of $Li_4Ti_5O_{12}$ of the lithium titanate powder obtained after calcination, the calcined object is cooled at a cooling speed of 100 to 200°C/min in an inert gas atmosphere until the maximum temperature during calcination becomes 500°C. When the cooling speed is slower than 100°C/min, Li tends to evaporate from the particle surface of the lithium titanate powder, crystallinity of the particle surface decreases, and thus becomes difficult to obtain the lithium titanate powder of the present invention. On the other hand, when the cooling speed is greater than 200°C/min, distortion is likely to be generated in crystal lattice of the particle surface and inside of the lithium titanate powder, and thus it becomes difficult to obtain the lithium titanate of the present invention. As long as the method can cool under such conditions, there are no particular limitations to the method. However, an example of the cooling method after calcination for the case where calcination is performed using a rotary-kiln type calcination furnace which is preferable for preparing the lithium titanate powder of the present invention will be explained. To a calcined object recovery opening of a furnace core tube of the rotary-kiln type calcination furnace, a calcined object recovery room that is not heated and a calcined object immediately guided thereto after retaining at the maximum temperature. To the calcined object recovery room, in order to adjust atmosphere within the room and to adjust cooling speed after introduction of the calcined object an introduction pipe for external gas is arranged. More, the calcined recovery room has a structure that is capable of performing air cooling from the outside. Then, at the time the calcined object is introduced to the calcined object recovery room which is cooled with air, by adjusting a flow amount of air for cooling from the outside, cooling speed for the calcined object is adjusted at the same time. To the calcined object recovery room, from the bottom surface to the upper part, thermocouples are arranged at a constant interval, and temperature of the calcined object can be measured immediately after introduction thereto. By checking the temperature measured by the thermocouple, flow amount of air for cooling the calcined object recovery room from the outside is adjusted to a predetermined cooling speed. In this way, for example, cooling speed for the lithium titanate powder immediately after calcination can be adjusted to desired speed.

<Postprocessing process>

Although the lithium titanate powder after calcination obtained as above has slight aggregation but does not require such milling to break particles, and only deagglomeration and classification that disentangle aggregation should be applied as needed. When only slight deagglomeration is performed to disentangle aggregation without performing milling, high crystallinity of the lithium titanate powder after calcination can be maintained and I/I0 becomes 5 or more.

It is surmised that lithium titanate powder with a smaller BET diameter (for example, a lithium titanate powder with $D_{BET}/D_X(\mu m/\mu m)$ of 2 or less) compared to crystallite diameter is obtained, which is preferable in the present invention, due to the following reasons.

A calcination temperature range of 700 to 800°C is the range where crystal nucleuses of lithium titanate start their generation. It is speculated that making the length of time stayed within the temperature range short suppresses the number of crystal nucleuses generated and enhances independent growth of each crystal nucleus, thus leading to a larger crystallite diameter in the obtained lithium titanate powder. On the other hand, calcination is preferably performed in short time at a low temperature in order to obtain lithium titanate powder with a small BET diameter. However, under such calcination conditions, reaction between titanium raw material and lithium raw material does not proceed and different phases such as rutile-type titanium dioxide is tend to be generated. In the present invention, it is speculated that BET diameter of the obtained lithium titanate powder can be made small while suppressing generation of different phases by reacting a titanium raw material and lithium raw material sufficiently by: making a mixture for calcination to a condition such that titanium raw material and lithium raw material in most places in the mixture can react easily even in a short-time calcination in advance, that is, fewer large particles which may take time to react sufficiently to the inside, and uniform mixture even locally; more specifically, preparing a mixed powder such that D95 becomes 5 $\mu m$ or less; and subjecting a mixture composed of the mixed powder or a granulated powder obtained by granulating the mixed powder to a short-time calcination at a high temperature of 800 °C or more.

[Active material]

The active material of the present invention contains the above lithium titanate powder. The active material of the present invention may contain one or more materials other than the lithium titanate powder. As for other materials, for example, carbon materials [pyrolytic carbons, cokes, graphite (such as artificial graphite and natural graphite), organic polymer compound burned materials, and carbon fibers], tin or tin compound, and silicon or silicon compound are used.

[Electrode sheet]

An electrode sheet of the present invention is a sheet including a mixture layer containing an active material (an active material of the present invention), conductive agent and binder on one surface or both surfaces of the current collector, and the electrode sheet is cut in accordance with a design shape of the energy storage device and used as a positive electrode or negative electrode.

[Energy storage device]

The energy storage device of the present invention is a device for storing and releasing energy by utilizing intercalation and deintercalation of lithium ions to electrodes containing the active material, such as a hybrid capacitor and lithium battery, etc.

[Hybrid capacitor]

The hybrid capacitor is a device where an active material such as activated carbon that generates capacity by physical adsorption similar to that of electrode material in an electric double-layer capacitor, an active material such as graphite that generates capacity by physical adsorption and intercalation and deintercalation, and an active material such as a conductive polymer that generates capacity by redox are used for the positive electrode, and where the active material of the present invention is used for the negative electrode.

[Lithium battery]

The lithium battery of the present invention includes both lithium primary battery and lithium secondary battery. Also, in this description, the term lithium secondary battery is used on the basis of the concept to include so-called lithium-ion secondary batteries.
The lithium battery consists of a positive electrode, a negative electrode, non-aqueous electrolyte where electrolyte salt is dissolved to a nonaqueous solvent, and so on, and the active material can be used as electrode material. The active material may be used as either a positive electrode active material or negative electrode active material. The following describes a case where the active material is used as the negative electrode active material.

<Negative electrode>

A negative electrode contains a mixture layer including a negative electrode active material (the active material of the present invention), a conductive agent, and a binder on single or both sides of a negative electrode current collector.
There are no particular restrictions to the conductive agent for a negative electrode, as long as it is electron conductive material that does not generate chemical changes. For example, graphite such as natural graphite (e.g., scale-like graphite) and artificial graphite, and carbon blacks such as acetylene black, Ketjenblack, channel black, furnace black, lamp black, and thermal black, carbon nanotubes such as single-layer carbon nanotube, multi-layered carbon nanotube (graphite layers in the form of multiple concentric cylinders)(non-fishbone shape), a cup layered type carbon nanotube (fish-bone shape (fishbone)), section-type carbon nanofiber (non-fishbone structure), and platelet-type carbon nanofiber (card-type) can be used. Also, graphites, carbon blacks, and carbon nanotubes may be mixed as required. Although there is no particular limitation, the specific surface area of carbon blacks is preferably 30 to 3,000 $m^2$/g and more preferably 50 to 2,000 $m^2$/g. When the specific surface area is below 30 $m^2$/g, contact area with the active material becomes low and thus conductivity is avoided and internal resistance rises. When the specific surface area exceeds 3,000 $m^2$/g the amount of solvent required for making coating material increases and improvement of electrode density becomes even difficult that is unsuitable for raising capacity of the mixture layer. Further, the specific surface area of graphites is preferably 30 to 600 $m^2$/g and more preferably 50 to 500 $m^2$/g. When the specific surface area is below 30 $m^2$/g, contact area with the active material becomes low and thus conductivity is avoided and internal resistance rises. When the specific surface area exceeds 600 $m^2$/g, the amount of solvent required for making coating material increases and improvement of electrode density becomes even difficult that is unsuitable for raising capacity of the mixture layer. More, an aspect ratio of carbo nanotubes is 2 to 150 and preferably 2 to 100, more preferably 2 to 50. When the aspect ratio is high, the structure of the formed fiber approaches a cylindrical tube shape and although conductivity in the fiber axis direction of a single fiber improves, frequency that the open ends of graphite mesh face constituting a structural unit body are exposed to the outer peripheral surface of the fiber becomes low, and thus conductivity between adjacent fibers decreases. On the other hand, when the aspect ratio is small, frequency of an open end of a graphite mesh face forming a structural unit body being exposed to the outer peripheral surface of the fiber becomes high, and thus conductivity between adjacent fibers improves. However, because the outer peripheral surface of the fiber is formed by many graphite mesh faces short in the fiber-axis direction by connection, conductivity of a single fiber in the fiber-axis direction is lost.

The amount of the conductive assistant to be added should be optimized since the addition amount varies according to the specific surface area of the active material, type and combinations of the conductive assistant, however, 0.1 to 10% by mass is preferable in the mixture layer, and 0.5 to 5% by mass is more preferable. When the addition amount is less than 0.1% by mass, conductivity of the mixture layer cannot be secured, and when it exceeds 10% by mass, because an active material ratio decreases and discharge capacity of the energy storage device per unit mass and unit volume of the mixture layer is insufficient, it is unsuitable for increasing the capacity.

The binder for a negative electrode is, for example, polytetrafluoroethylene (PTFE), polyvinylidene fluoride (PVDF), polyvinylpyrrolidone (PVP), styrene butadiene copolymer (SBR), acrylonitrile butadiene copolymer (NBR), and carboxymethyl cellulose (CMC), etc. Although the molecular weight of polyvinylidene fluoride is not especially limited, it is preferably 20,000 to 200,000. From a viewpoint of securing biding property of the mixture layer, 25,000 or more is preferable, 30,000 or more is more preferable, and 50,000 or more is further more preferable. From a viewpoint of securing conductivity without disturbing contact between the active material and conductive agent, 150,000 or less is preferable. Particularly, when the specific surface area of the active material is 10 m$^2$/g or more, the molecular weight is preferably 100,000 or more.

The amount of the binder to be added should be optimized in accordance with the specific surface area of the active material, type and combinations of the conductive assistant, however, addition amount is preferably 0.2 to 15% by mass in the mixture layer. From a viewpoint of securing strength of the mixture layer by increasing the binding property, 0.5% by mass or more is preferable, 1% by mass or more is more preferable, and 2% by mass or more is further more preferable. From a viewpoint of not lowering the active material ratio and increasing discharge capacity of the energy storage device per unit mass and unit volume of the mixture layer, 10% by mass or less is preferable and 5% by mass or less is more preferable.

As for the negative electrode current collector, for example, the one made from aluminum, stainless steel, nickel, copper, titanium, and calcined carbon, and these where the surface is covered with carbon, nickel, titanium, or silver, etc., may be used. Further, the surface of these materials can be oxidized or subjected to surface treatment so as to make the surface of the negative electrode current collector rough. Moreover, the negative electrode current collector may be in the form of, for example, a sheet, net, foil, film, punched material, lath, porous material, foamed material, fiber group, nonwoven fabric molding, etc.

With respect to the manufacture method of the negative electrode, the negative electrode can be obtained by uniformly mixing a negative electrode active material (the active material of the present invention), conductive agent, and binder to make a coating material, applying the coating material to the negative electrode current collector, and then drying, and compressing.

As to the method of making the coating material by uniformly mixing the active material (the active material of the present invention), conductive agent, and binder into the solvent, for example, a kneader such as a planetary mixer in which a stirring rod rotates while revolving in the kneading container, a biaxial extrusion type kneader, a planetary-type agitation defoaming device, a bead mill, a high-speed revolving mixer, a powder-suction continuous dissolving and dispersing device, etc., may be used. Also, by dividing the manufacture process by solid content concentration, these devices may be selected accordingly.

In order to uniformly mix the negative active material (the active material of the present invention), conductive agent, and binder to a solvent, optimization should be performed according to the specific surface area of the active material, type of conductive assistant, type of binder, and its combinations. However, when a kneader in which a stirring rod rotates while revolving in a kneading container, a biaxial extrusion type kneader, or a planetary-type agitation defoaming device, etc., is used, it is preferable to gradually reduce the solid content concentration to adjust viscosity of the coating material after dividing the manufacture process by solid content concentration and kneading in a state where the solid content concentration is high. The state of high solid content concentration is preferably 60 to 90% by mass and more preferably 70 to 90% by mass. The shearing force cannot be obtained under 60% by mass, whereas over 90% by mass is unsuitable since the load to the device increases.

There is no particular limitation to the mixing procedure, and a method of mixing the negative active material, conductive agent, biding agent simultaneously in the solvent, a method of adding and mixing the negative active material after mixing the conductive agent and binder in the solvent in advance, and a method of mixing each of the negative active material slurry, conductive agent slurry, and binder solution prepared in advance, etc., can be exemplified. Among these, in order to disperse uniformly, a method of adding and mixing the negative active material after mixing the conductive agent and binder in the solvent in advance and a method of mixing each of the negative active material slurry, conductive agent slurry, and binder solution prepared in advance are preferable.

As the solvent, water and an organic solvent can be used. For the organic solvent, an aprotic organic solvent such as N-methylpyrrolidone, dimethylacetamide, and dimethylformamide may be used singly or in a mixture of two kinds or more can be mentioned, but preferably N-methylpyrrolidone.

When water is used as the solvent, it is preferable to add water in the last manufacture process, which is the viscosity adjustment process, in order to avoid aggregation of the binder. More, when the pH of the coating material becomes high, corrosion of aluminum occurs when aluminum is used for the negative current collector, so that it is preferable to add an acidic compound to lower the pH to the level where corrosion does not occur. For the acidic compound, either inorganic acid or organic acid can be used. As the inorganic acid, phosphoric acid, boric acid, and oxalic acid are preferable, however, oxalic acid is more preferable. As the organic acid, organic carboxylic acid is preferable. Further, as a method for preventing corrosion of aluminum, an aluminum current collector obtained by covering a surface of an aluminum current collector by an alkali-resistant material such as a carbon is preferably used.

When an organic solvent is used for the solvent, it is preferable to dissolve the binder in advance to the organic solvent before use.

<Positive electrode>

A positive electrode includes a mixture layer containing a positive electrode active material, a conductive agent, and a binder on single or both faces of a positive electrode current collector.

As the positive electrode active material, a material that can absorb and release lithium is used. For example, as an active material, lithium metal complex oxide containing cobalt, manganese, or nickel, and olivine type lithium metal phosphate, etc., may be used. These active materials can be used singly or in combination of two or more kinds. Examples of such complex metal oxide are, $LiCoO_2$, $LiMn_2O_4$, $LiNiO_2$, $LiCo_{1-x}Ni_xO_2$ (0.01<x<1), $LiCo_{1/3}Ni_{1/3}Mn_{1/3}O_2$, and $LiNi_{1/2}Mn_{3/2}O_4$, etc. A part of these lithium metal complex oxides can be replaced with another element. For example, the part of cobalt, manganese, or nickel may be replaced with at least one kind of element selected from Sn, Mg, Fe, Ti, Al, Zr, Cr, V, Ga, Zn, Cu, Bi, Mo, and La, etc., or the part of "O" may be replaced with "S" or "F". Also, these complex metal oxides may be coated with a compound containing these other elements. An example of olivine type lithium metal phosphate is at least one kind selected from the group consisting of $LiFePO_4$, $LiCoPO_4$, $LiNiPO_4$, $LiMnPO_4$, $LiFe_{1-x}M_xPO_4$, etc., (where M is at least one kind selected from the group consisting of Co, Ni, Mn, Cu, Zn, and Cd, and x satisfies $0 \leq x \leq 0.5$).

The conductive agent and binder for the positive electrode are the same as those used for the negative electrode. The positive electrode current collector is, for example, aluminum, stainless steel, nickel, titanium, calcined carbon, and aluminum or stainless steel with its surface treated with carbon, nickel, titanium, or silver, or the like. The surface of these materials can be oxidized or subjected to surface treatment so as to make the surface of the positive electrode current collector rough. Moreover, the current collector may be in the form of, for example, a sheet, net, foil, film, punched material, lath, porous material, foamed material, fiber group, nonwoven fabric molding, etc.

<Non-aqueous electrolyte solution>

The non-aqueous electrolyte solution is made by dissolving electrolyte salt to a nonaqueous solvent. There are no particular restrictions to the non-aqueous electrolyte solution and various types can be used.

As an electrolyte salt, the one that dissolves into nonaqueous solvent is used. For example, an inorganic lithium salt such as $LiPF_6$, $LiBF_4$, $LiPO_2F_2$, $LiN(SO_2F)_2$, and $LiClO_4$, a lithium salt containing a chain fluoroalkyl group such as $LiN(SO_2CF_3)_2$, $LiN(SO_2C_2F_5)_2$, $LiCF_3SO_3$, $LiC(SO_2CF_3)_3$, $LiPF_4(CF_3)_2$, $LiPF_3(C_2F_5)_3$, $LiPF_3(CF_3)_3$, $LiPF_3(iso-C_3F_7)_3$, and $LiPF_5(iso-C_3F_7)$, a lithium salt containing a cyclic fluorinated alkylene chain such as $(CF_2)_2(SO_2)_2NLi$ and $(CF_2)_3(SO_2)_2NLi$, a lithium salt that contains oxalate complex as an anion such as lithium bis[oxalate-O,O']borate and lithium difluoro[oxalate-O,O']borate, etc., may be used. Among these, particularly preferable electrolyte salts are $LiPF_6$, $LiBF_4$, $LiPO_2F_2$, and $LiN(SO_2F)_2$, and most preferable electrolyte salt is $LiPF_6$. These electrolyte salts may be used singly or in combination of two or more. More, as for the suitable combination of these electrolyte salts, a case where $LiPF_6$ is contained, and also when at least one kind of lithium salt selected from $LiBF_4$, $LiPO_2F_2$, and $LiN(SO_2F)_2$ is contained to the non-aqueous electrolyte solution is preferable.

The electrolyte salts are completely dissolved in use and concentration of electrolyte salts is generally 0.3M or more with respect to the nonaqueous solvent, more preferably 0.5M or more, and further preferably 0.7M or more. Further, its upper limit is preferably 2.5M or less, more preferably 2.0M or less, further preferably 1.5M or less.

Further, examples of the nonaqueous solvent include cyclic carbonate, chain carbonate, chain ester, ether, amide, phosphoric ester, sulfonate, lactone, nitrile, and S=O bond-containing compound, etc, it preferably includes cyclic carbonate. The term "chain ester" is used based on the concept including chain carbonate and chain carboxylic acid.

As cyclic carbonate, one, or more kinds selected from ethylene carbonate (EC), propylene carbonate (PC), 1,2-butylene carbonate, 2,3-butylene carbonate, 4-fluoro-1,3-dioxolane-2-one (FEC), trans- or cis-4,5-difluoro-1,3-dioxolane-2-one (hereinafter, both of them are collectively referred to as "DFEC"), vinylene carbonate (VC), vinyl ethylene carbonate (VEC), and 4-ethynyl-1,3-dioxolane-2-one (EEC) can be exemplified. From a viewpoint of raising the effect of improving 50C charge rate performance and lowering gas generation after high-temperature storage, one or more kinds selected from ethylene carbonate, propylene carbonate, 1,2-butylene carbonate, 2,3-butylene carbonate, 4-fluoro-1,3-dioxolane-2-one, and 4-ethynyl-1,3-dioxolane-2-one (EEC) are suitable. More, one or more kinds of cyclic carbonates including an alkylene chain selected from propylene carbonate, 1,2-butylene carbonate, and 2,3-butylene carbonate are more suitable. The percentage of cyclic carbonate including an alkylene chain is preferably within a range of 55% by volume to 100% by volume and more preferably within a range of 60% by volume to 90% by volume.

Accordingly, as the non-aqueous electrolyte solution, a non-aqueous electrolyte solution where electrolyte salt including at least one kind of lithium salt selected from $LiPF_6$, $LiBF_4$, $LiPO_2F_2$, and $LiN(SO_2F)_2$ is dissolved to a non-aqueous solvent including one kind or more cyclic carbonates selected from ethylene carbonate, propylene carbonate, 1,2-butylene carbonate, 2,3-butylene carbonate, 4-fluoro-1,3-dioxolane-2-one, and 4-ethynyl-1,3-dioxolane-2-one is preferably used. As the cyclic carbonate, one kind or more cyclic carbonates having alkylene chain selected from propylene carbonate, 1,2-butylene carbonate, and 2,3-butylene carbonate are preferable.

In particular, the non-aqueous electrolyte solution which has a concentration of all electrolyte salts of 0.5M or more and 2.0M or less, includes at least $LiPF_6$ as electrolyte salt, and further includes at least one kind of lithium salt selected from $LiBF_4$, $LiPO_2F_2$, and $LiN(SO_2F)_2$ within a range of 0.001M or more and 1M or less. If a ratio of lithium salt other than $LiPF_6$ is 0.001M or more in the nonaqueous solvent, the effect of improving 50C charge rate performance and lowering gas generation after high-temperature storage in the energy storage device are easily obtained, if the ratio is 1.0 M or less, it is few possibility to deteriorate the effect of improving 50C charge rate performance and lowering gas generation after high-temperature, and it is preferable. The ratio of lithium salt other than $LiPF_6$ in the nonaqueous solvent is preferably 0.01M or more, particularly preferably 0.03M or more, most preferably 0.04M or more. The upper limit thereof is preferably 0.8M or less, further preferably 0.6M or less, particularly preferably 0. 4M or less.

The nonaqueous solvent is usually used in a mixture in order to accomplish appropriate physical properties. As the combination, combinations of a cyclic carbonate and a chain carbonate, combinations of a cyclic carbonate, a chain carbonate and a lactone, combinations of a cyclic carbonate, a chain carbonate and an ether, combinations of a cyclic carbonate, a chain carbonate and a chain ester, combinations of a cyclic carbonate, a chain carbonate and a nitrile, or combinations of a cyclic carbonate, a chain carbonate and a S=O bond-containing compound may be suitably mentioned.

As chain ester, one, two or more kinds of asymmetrically chain carbonates selected from methyl ethyl carbonate (MEC), methyl propyl carbonate (MPC), methyl isopropyl carbonate (MIPC), methyl butyl carbonate, and ethyl propyl carbonate; one or two kinds of symmetrically chain carbonates selected from dimethyl carbonate (DMC), diethyl carbonate (DEC), dipropyl carbonate, and dibutyl carbonate; and one or two kinds of chain carboxylic acid esters selected from pivalic acid ester such as pivalic acid methyl, pivalic acid ethyl, and pivalic acid propyl, propionic acid methyl, propionic acid ethyl, propionic acid propyl, methyl acetate, and ethyl acetate (EA).

Among the chain esters, chain ester including a methyl group selected from dimethyl carbonate, methyl ethyl carbonate, methyl propyl carbonate, methyl isopropyl carbonate, methyl butyl carbonate, propionic acid methyl, methyl acetate, and ethyl acetate (EA) is preferable, and chain carbonate including methyl group is particularly preferable.

Further, when chain carbonate is used, using two kinds or more is preferable. Furthermore, including both symmetrically chain carbonate and asymmetrically chain carbonate is more preferable, and including more symmetrically chain carbonate than the content of asymmetrically chain carbonate is further more preferable.

The chain ester content is not particularly limited, however, it is preferable when the content is within a range of 60 to 90% by volume of the total volume of the nonaqueous solvent. When the content is 60% by volume or more, viscosity of the non-aqueous electrolyte solution does not become too high and when the content is 90% by volume or less, the risk of lowering the effect of improvement in 50C charge rate performance and the effect of suppressing gas generation after high-temperature storage due to lowering of electric conductivity of the non-aqueous electrolyte solution is small. Accordingly, the above range is preferable.

The percentage of the symmetrically chain carbonate volume in chain carbonate is preferably 51% by volume or more, and more preferably 55% by volume or more. As to the upper limit, 95% by volume or less is preferable, and 85% by volume or less is more preferable. When symmetrically chain carbonate includes dimethyl carbonate, it is particularly preferable. Also, it is more preferable when asymmetrically chain carbonate includes a methyl group, and thus methyl ethyl carbonate particularly preferable. The above case is further preferable since the effect of improvement in the 50C charge rate performance and the effect of suppressing gas generation after high-temperature storage improve.

From a viewpoint of raising the effect of improvement in 50C charge rate performance and the effect of suppressing gas generation after high-temperature storage, a ratio of cyclic carbonate to chain ester, cyclic carbonate:chain ester (a volume ratio), is preferably within a range of 10:90 to 45:55, more preferably 15:85 to 40:60, and particularly preferably 20:80 to 35:65.

<Lithium battery structure>

The structure of the lithium battery of the present invention is not particularly limited. For instance, a coin type battery including a positive electrode, negative electrode, and single- or multi-layered separator, and a cylindrical battery and square type battery including a positive electrode, negative electrode, and roll separator, are some examples.

As a separator, an insulative thin film having high ion permeability and with a prescribed mechanical strength is used. Polyethylene, polypropylene, a cellulose paper, a glass fiber paper, polyethylene terephthalate, a polyimide micro porous film are some examples, and a multi-layered film formed by a combination of two or more of these can be also used. Also, surfaces of these separators may be coated with resin such as PVDF, silicon resin, and rubber resin, or with metal oxide particles such as aluminum oxide, silicon dioxide, and magnesium oxide. The pore diameter of the separator should be within the range useful for a battery in general, for example, 0.01 to 10 $\mu$m. The thickness of the separator should be within the range of a battery in general, for example, 5 to 300 $\mu$m.

Examples

In the following, the present invention will be specifically described using examples and comparative examples. However, the present invention is not construed as being limited to the following examples, but intended to include various combinations that can be easily analogized from the scope of the invention. Particularly, solvent combinations are not limited to those used in examples. Manufacturing processes of examples and comparative examples described below are summarized in Table 1, and the physical property values and performance values of the examples and comparative examples are summarized in Table 2.

[Method of measuring physical properties]

[1. XRD]

As a measurement device, an X-ray diffractometer that utilizes CuK$\alpha$ ray (RINT-TTR-III of Rigaku Corporation) was used. The conditions for the X-ray diffraction measurement were: measurement angle range ($2\theta$) of 10° to 90°, step interval of 0.02°, length of measurement time of 0.25 sec./step, radiation source of CuK$\alpha$ ray, tube bulb voltage of 50kV, and current of 300 mA.

The main peak intensity of the lithium titanate (peak intensity that derives from the (111) plane within the diffraction angle range of $2\theta$ = 18.1 to 18.5°), the main peak intensity of the anatase-type titanium dioxide (peak intensity that derives from the (101) plane within the diffraction angle range $2\theta$ = 24.7 to 25.7°), the main peak intensity of rutile-type titanium dioxide (peak intensity that derives from the (110) plane within the diffraction angle range of $2\theta$ = 27.2 to 27.6°), and the main peak intensity of $Li_2TiO_3$ (peak intensity within the diffraction angle range of $2\theta$ = 43.5 to 43.8°) were measured. Also, by multiplying 100/80 to the peak intensity that derives from the (-133) plane of $Li_2TiO_3$, a main peak intensity of $Li_2TiO_3$ (peak intensity that corresponds to the (002) plane) was calculated.

Then, a relative value of the peak intensity when the main peak intensity of lithium titanate is defined to be 100 was calculated for rutile-type titanium dioxide, anatase-type titanium dioxide, and $Li_2TiO_3$.

Next, to the lithium titanate powder, a lithium titanate powder containing silicon powder obtained by adding silicon powder (NIST standard reference material 640d) by 10 mass% in outer percentage, mixing with agate mortar until the mixed powder becomes uniform was obtained as the internal standard sample. From the X-ray diffraction measurement, diffraction integrated intensity I of the (111) plane of $Li_4Ti_5O_{12}$ and the diffraction integrated intensity 10 of the (111) plane of Si are measured and their ratio I/I0 is calculated.

[2. Crystallite diameter (Dx)]

The crystallite diameter ($D_X$) of the lithium titanate powder of the present invention was determined using the following Scherrer's formula, the formula (1) below, from the half-peak width of the peak of the (111) plane of lithium titanate obtained under the measurement conditions of measurement angle range ($2\theta$) of 15.8° to 21.0°, step interval of 0.01°, length of measurement time of 1 sec./step, radiation source of CuK$\alpha$ ray, tube bulb voltage of 50kV, and current of 300 mA, using the same X-ray diffraction measurement device as the XRD mentioned above. In calculation of the half-peak width, the ray width by the diffractometer optical system needs to be corrected, and for the correction, a silicon powder was used.

$$D_X = K \cdot \lambda / (FW(S) \cdot \cos\theta_c) \qquad \dots \quad (1)$$

$$FW(S)\hat{}D = FWHM\hat{}D - FW(I)\hat{}D$$

$$FW(I) = f0 + f1 \times (2\theta) + f2 \times (2\theta)^2$$

$$\theta_c = (t0 + t1 \times (2\theta) + t2 (2\theta)^2) / 2$$

K: Scherrer constant (0.94)
$\lambda$ : CuK$\alpha_1$ ray wavelength (1.54059Å)
FW (S) : half-peak width (FWHM) unique to the sample
FW (I) : half-peak width (FWHM) unique to the device
D : deconvolution parameter (1.3)
f0 = 5.108673E - 02
f1 = 1.058424E - 04
f2 = 6.871481E - 06
$\theta_c$ : correction value for the Bragg angle
t0 = -3.000E - 03
t1 = 5.119E - 04
t2 = -3.599E - 06

[3. Particle size distribution]

For the particle size distribution measurement of the mixed powder and lithium titanate powder of the present invention, a laser diffraction/scattering particle size analyzer (Microtrac MT3300EXII of Nikkiso Co., Ltd.) was used. For the preparation of a measurement sample, ethanol was used as a measurement solvent for the case of a mixed powder and ion exchange water was used for the case of lithium titanate powder. When the measurement sample was a powder, approximately 50 mg of the sample was added to 50 ml of the measurement solvent and then 1 cc of 0.2% aqueous solution of sodium hexametaphosphate as a surfactant was added. The obtained slurry for the measurement was treated with an ultrasonic homogenizer. When the measurement sample was a mixed slurry composed of a mixed powder, the same method as used for when the measurement sample was a powder was used except that approximately 50 mg of the sample on a powder basis was added. The subsequent operations were performed in the same method regardless of the measurement sample types. The slurry for the measurement subjected to dispersion treatment was put into a measurement cell and then the slurry concentration was adjusted by adding the measurement solvent. When the slurry transmittance became within the appropriate range, particle size distribution was measured. From the obtained particle size distribution curve, D95 of the mixed powder were calculated.

[4. BET specific surface area ($m^2$/g)]

A BET specific surface area was measured in a one-point method using liquid nitrogen, using the automatic BET specific surface area analyzer (Macsorb HM model-1208, of Mountech Co., Ltd.).

[5. BET diameter ($D_{BET}$)]

The BET diameter ($D_{BET}$) was determined using the following formula (2) assuming that all particles constituting the powder were the spheres having the same diameter. Here, $D_{BET}$ is the BET diameter ($\mu$m), $\rho_S$ is the true density (g/cc) of lithium titanate, and S is the BET specific surface area ($m^2$/g).

$$D_{BET} = 6/(\rho_S \times S) \qquad (2)$$

[Example 1]

Li$_2$CO$_3$ (average particle size of 4.6 $\mu$m) and completely anatase-type TiO$_2$ (average particle size of 0.6 $\mu$m, rutile content: 0 mass%) were weighed so as to achieve the atomic ratio of Li to Ti, Li/Ti, of 0.83 and as a flux, boric acid was weighed so as to become 0.01 mass% relative to completely anatase-type TiO$_2$. Then, ion exchange water was added until the solid content concentration became 41 mass% and then stirred to create a mixed slurry. The mixed slurry was milled and mixed using a bead mill (type; DYNO-MILL KD-20BC of Willy A. Bachofen AG, agitator material: polyurethane, vessel inner material: zirconia) where the beads were filled into the vessel by 80% by volume and controlling the agitator rotation speed to 13 m/s, slurry feed speed to 55 kg/hr., and vessel inner pressure to 0.02 to 0.03 MPa or less. From the obtained particle size distribution, D95 of the mixed powder after bead mill milling and mixing, that is a mixing powder to be subjected to calcination, was calculated. The calculation result is shown in Table 1 with manufacturing processes.

The obtained slurry was led into the furnace core tube of the rotary-kiln type calcination furnace (furnace core tube length: 4 m, furnace core tube diameter: 30 cm, external heating) with an adhesion prevention mechanism from the raw material supply side and then dried and calcined in a nitrogen atmosphere . At this time, slope angle for the furnace core tube was 2 degrees from the horizontal direction, the furnace core tube rotation speed was 20 rpm, and flow speed of nitrogen injected into the furnace core tube from the calcined material recovery side was 20 lit./min. Heating temperature of the furnace core tube was 900°C for the raw material supply side, 900°C for the central section, and 900°C for the calcined material recovery side. The length of time the calcined object remains in the heating region was 26 minutes. The calcined object was recovered to an SUS container which has a capacity of 45L and adjusted to a nitrogen atmosphere that is placed to the calcined object recovery opening of the furnace core tube immediately after passing through the heating region. By arranging thermocouple around the bottom surface, temperature of the calcined object was measured. The length of time the calcined object arrives at the recovery room from the heating region on the calcined object recovery side was 15 seconds and the temperature of the calcined object immediately after recovery was 870°C. Also, in order to make the cooling speed to 150°C/min until the temperature of the calcined object reaches 100°C, from the outside of the SUS container which has a capacity of 45L, air cooling was performed. Then, the calcined material recovered from the calcined material recovery side of the furnace core tube was deagglomerated using a hammer mill (AIIW-5 of Dalton Co., Ltd.) under conditions where screen mesh size was 0.5 mm, number of rotation times was 8,000 rpm, and powder feed speed was 25 kg/hr. The deagglomerated powder was sieved (mesh size of 45 μm) and the powder that passed through the sieve was collected.

For the obtained lithium titanate powder, measurement of physical properties described in [Method of measuring physical properties] was performed. The results are shown in Table 2.

<Preparation of non-aqueous electrolytic solution for performance evaluation>

The non-aqueous electrolytic solution for use in a battery for performance evaluation was prepared as follows. A nonaqueous solvent having a volume ratio of ethylene carbonate (EC):propylene carbonate (PC):methyl ethyl carbonate (MEC):dimethyl carbonate (DMC) = 10:20:20:50 was first prepared and then $LiPF_6$ and $LiPO_2F_2$ were dissolved thereto as the electrolyte salt so as to become the concentration of 1M and 0.05M respectively to prepare a non-aqueous electrolytic solution.

<Manufacture of an evaluation electrode sheet>

A coating material was prepared as follows so as to achieve the ratio where lithium titanate powder of Example 1 is 90 mass%, acetylene black (conductive agent) is 5 mass%, and polyvinylidene fluoride (binding agent) is 5 mass%. After mixing polyvinylidene fluoride dissolved to the 1-methyl 2-pyrrolidone solvent in advance, acetylene black, and 1-methyl 2-pyrrolidone solvent using a planetary-type agitation defoaming device, lithium titanate powder was added, a solid content concentration was adjusted to become 64 mass%, and then mixed using the planetary-type agitation defoaming device. Then, the 1-methyl 2-pyrrolidone solvent was added to make the total solid content concentration to 56 mass% and mixed using the planetary-type agitation defoaming device to prepare coating material. The obtained coating material was applied onto an aluminum foil and then dried to obtain an evaluation electrode single-side sheet. More, the coating material was applied to both sides of an aluminum foil and dried to obtain an evaluation electrode double-side sheet. Here, the evaluation electrode single-side sheet and evaluation electrode double-side sheet were manufactured so as to have different mixture-layer thickness.

<Manufacture of a counter electrode sheet>

In the same manufacture method described in <Manufacture of an evaluation electrode sheet> above, coating material containing cobaltic lithium powder by 90 mass%, acetylene black (conductive agent) by 5 mass%, and polyvinylidene fluoride (binding agent) by 5 mass% was prepared as an active material. Then, the coating material was applied onto an aluminum foil and after drying, the coating material was also applied to the other face and dried to obtain a counter electrode double-side sheet.

[Method of electrode potential evaluation]

[Manufacture of a three-electrode cell]

After pressing the evaluation electrode single-side sheet with a pressure of 2t/cm$^2$, the sheet was stamped out to manufacture an evaluation electrode. At this time, the thickness of a mixture layer was 10 $\mu$m and the amount of mixture was 16g/m$^2$. Next, a lithium foil was pasted to an SUS mesh plate to manufacture a counter electrode. Then, the lithium foil was pasted on another SUS mesh plate to manufacture a reference electrode (Li reference electrode). As non-aqueous electrolytic solution, a nonaqueous solvent that is ethylene carbonate (EC):methyl ethyl carbonate (MEC)(volume ratio)=3:7 was prepared and electrolytic solution to which LiPF$_6$ as electrolyte salt was dissolved so as to become a concentration of 1M was added to manufacture a three-electrode cell.

[Measurement of a charge capacity ratio for 25°C (to 1.6V/to IV)]

In a constant temperature bath that is 25°C, potential (vs Li/Li$^+$) based on Li/Li$^+$ equilibrium potential of an evaluation electrode of the three-electrode cell manufactured in the method described in [Manufacture of a three-electrode cell] was measured. Then, to the three-electrode cell, considering the direction that Li is absorbed to the evaluation electrode as charging, from the first completely discharged state, a cycle of charging with a current of 0.1C until the potential of the evaluation electrode reaches 1V (vs Li/Li$^+$) and discharging at a current of 0.1C until the potential becomes 2V (vs Li/Li$^+$) was repeated for three times. For the third cycle, a charge capacity ratio (to 1.6V/to 1V) of the charge capacity of the three-electrode cell from the completely discharged state until the potential of the evaluation electrode lowers up to 1.6V (vs Li/Li$^+$) to the charge capacity of the three-electrode cell until the potential of the evaluation electrode lowers up to 1V (to 1.6V/to 1V) was calculated. The result is shown in Fig. 1 and Table 2. Here, 0.1C means a current value when charge capacity of the three-electrode cell that lowers from the completely discharged state to 1V (vs Li/Li$^+$) can be charged in 10 hours.

[Measurement of a charge capacity ratio for 0°C (to 1.58V/to 1V)]

In a 0°C constant temperature bath, measurement of potential (vs Li/Li$^+$) based on the Li/Li$^+$ equilibrium potential of the evaluation electrode for the three-electrode cell to which a charge capacity ratio was performed in the method described in <Measurement of a charge capacity ratio for 25°C (to 1.6V/to 1V)> above. Then, when the direction where Li is absorbed to the evaluation electrode is considered as charge, a cycle of charging with a current of 0.1C until the potential of the evaluation electrode reaches 1V (vs Li/Li$^+$) and discharging (that is, discharge up to a completely discharged state), at the current of 0.1C until the potential becomes 2V (vs Li/Li$^+$) was repeated for three cycles. For the third cycle, a charge capacity ratio of the charge capacity of the three-electrode cell until potential of the evaluation electrode lowers from the completely discharged state to 1.58V(vs Li/Li$^+$) to charge capacity of the three-electrode cell until the potential of the evaluation electrode lowers from the completely discharged state to 1V (vs Li/Li$^+$) was calculated. The result is shown in FIG. 2 and Table 2.

[Measurement of a charge capacity ratio for 60°C (to 1.6V/to 1V) after cycle test]

In a 60°C constant temperature bath, to a three-electrode cell to which measurement of a charge capacity ratio was performed by the method explained in <Measurement of a charge capacity ratio for 25°C (to 1.6V/to 1V)> above, a cycle of charging with a current of 1C until the potential of the evaluation electrode becomes 1V (vs Li/Li$^+$) and discharging with a current of 1C until the potential reaches 2V (vs Li/Li$^+$) was repeated for 100 times. Then, within a 25°C constant temperature bath, potential (vs Li/Li$^+$) of the three-electrode cell based on the Li/Li$^+$ equilibrium potential of the evaluation electrode was measured. Then, considering the direction where Li is absorbed to the evaluation electrode as charge, a cycle of charging at a current of 0.1C until the potential of the evaluation electrode reaches 1V (vs Li/Li$^+$) and discharging until the potential reaches 2V (vs Li/Li$^+$) (that is, discharging up to a completely discharged state) was repeated for three times. For the third cycle, a charge capacity ratio (to 1.6V/to 1V) of charge capacity of the three-electrode cell from the completely charged state until the potential of the evaluation electrode lowers to 1.6V (vs Li/Li$^+$) to charge capacity of the three-electrode cell until the potential of the evaluation electrode lowers from the completely discharged state to 1V (vs Li/Li$^+$) was calculated. The result is shown in Table 2.

<Manufacture of a coin battery>

The evaluation electrode single-side sheet was stamped out to a disk shape having a diameter of 14 mm, pressed under a pressure of 7 t/cm$^2$, and dried under a vacuum for 5 hours at 120°C to manufacture an evaluation electrode. At this time, the thickness of the mixture layer at this time was 10 $\mu$m and the mixture amount was 16g/m$^2$. The manufactured evaluation electrode and metal lithium (formed to a disk having a thickness of 0.5mm and diameter of 16 mm) was placed while facing each other with a glass filter (a double layer of GA-100 and GF/C, manufactured by Whatman) interposed therebetween for use in a battery for evaluation. By adding non-aqueous electrolytic solution for performance evaluation to each and then sealing, a 2030-type coin-type battery was manufactured.

<Manufacture of a laminated battery>

The evaluation electrode double-side sheet was pressed with a pressure of 2 t/cm$^2$, and then stamped out to obtain a negative electrode where the mixture layer including a lead wire connection section is 4.2 cm in the vertical direction and 5.2 cm in the horizontal direction. At this time, the thickness of the mixture layer on one side was 40 $\mu$m, and the mixture amount was 70g/m$^2$. The counter electrode double-side sheet was pressed with a pressure of 2 t/cm$^2$ and then stamped out to obtain positive electrode where the mixture layer including a lead wire connection section is 4 cm in the vertical direction and 5 cm in the horizontal direction. The manufactured negative electrode and positive electrode were faced each other through a separator (UP3085, manufactured by Ube Industries, Ltd.) interposed therebetween, layered, connected the lead wires of the aluminum foil for both the negative and positive electrodes, added the non-aqueous electrolytic solution for performance evaluation, and vacuum sealed with aluminum laminate to manufacture a laminate-type battery for evaluation of gas generation during storage at 60°C. At this time, the capacity of the battery was 200 mAh and the ratio of the negative electrode to positive electrode capacities (the ratio of negative electrode capacity/positive electrode capacity) was 1.1.

<Measurement of initial charge-discharge capacity (room temperature)>

To the coin-type battery manufactured in the method explained in manufacture of a coin battery> above, in a 25°C constant temperature bath, when the direction where Li is absorbed to the evaluating electrode is considered as charging, a cycle of constant-voltage and constant-current charge, in which the coin-type battery was charged up to 1V with a current density of 0.2 mA/cm$^2$ and then charged at 1V until the charge current becomes a current density of 0.05 mA/cm$^2$, and constant current discharge, in which the coin-type battery was discharged up to 2V at a current density of 0.2 mA/cm$^2$, was repeated for three times. Then, the discharge capacity in the third cycle was used as the initial capacity. By dividing the initial capacity by the charge capacity, initial charge-discharge efficiency was calculated. The result is shown in Table 2.

<Evaluation of 50C charge rate performance (room temperature)>

For the coin battery to which the initial discharge capacity was measured, constant current charge where the battery is charged up to 1V with a current of 0.2C was performed in a 25°C constant temperature bath, and then constant current discharge where the battery is discharged up to 2V with a current density of 0.2C was performed to measure charge capacity at 50C current. Then, a value determined by dividing the charge capacity at 50C current by the charge capacity at 0.2C current was set as a 50C charge rate performance value. The result is shown in Table 2. Here, 0.2C and 50C indicate the current values where the initial discharge capacity described above can be charged in five hours and 1/50 hour respectively.

<Measurement of gas generation during storage (60°C)>

In the 25°C constant temperature bath, the manufactured laminated battery was charged up to 2.75V by 40 mA, subjected to constant-voltage and constant-current charge at 2.75V until the charge current became 10 mA, and then subjected to constant current discharge with 40 mA current up to 1.4V. This cycle was repeated for three times. The laminated battery was taken out from the constant temperature bath and in the Archimedes method, a volume of the laminated battery (a volume of the laminated battery before storage) was measured. Then, the temperature of the constant temperature bath was set to 60°C and the laminated battery was stored for seven days in a charged state at 60°C. After the storage, the temperature of the constant temperature bath was set to 25°C and at 25°C, constant current discharge where the laminated battery is discharged up to 1.4V at a 40-mA current was performed. Next, the laminated battery was taken out from the constant temperature bath and the volume of the laminated battery (a volume of the laminated battery after storage) was measured in the Archimedes method. By subtracting the volume of the laminated battery before storage from the volume of the laminated battery after storage, the gas generation amount during storage (60°C) was calculated. The result is shown in Table 2.

[Example 2 and Example 3]

The lithium titanate powder according to Example 2 and Example 3 was prepared in the same method described in Example 1 and evaluation of physical properties was performed in the same method described in Example 1 except that the mixed powder with the D95 shown in Table 1 was obtained by adjusting processing conditions of bead mill milling and mixing during the material preparation process, and calcination was performed to the obtained mixed powder while using the maximum temperature during the calcination process and retention time of the maximum temperature shown in Table 1. Then, evaluation of physical properties was performed in the same method as in Example 1. Also, a three-electrode cell to which the lithium titanate powder is applied to the electrode material was manufactured in the same method as in Example 1. Using the cell, in the same method as in Example 1, potential evaluation was performed for each electrode. More, a coin-type and laminate-type batteries were prepared in the same method as in Example 1, and evaluation of battery performance was performed in the same method as in Example 1. The obtained evaluation of physical properties, evaluation of electrode potential, and evaluation of battery performance of the lithium titanate powder according to Example 2 and Example 3 are shown in Table 2.

[Example 4]

The lithium titanate powder for Example 4 was obtained in the same method as in Example 1 except that no flux was used, the mixed powder with the D95 shown in Table 1 was obtained by adjusting process conditions for bead mill milling and mixing during raw material preparation process, and calcination was performed to the obtained mixed powder using the maximum temperature of the calcination process and retention time of the maximum temperature shown in Table 1. Then, evaluation of physical properties was performed in the same method as in Example 1. Also, a three-electrode cell to which the lithium titanate powder was applied to electrode material was manufactured in the same method as in Example 1, and with the cell, potential evaluation was performed for each electrode in the same method as in Example 1. Also, a coin-type battery and laminate-type battery to which the lithium titanate powder was applied to the electrode material were manufactured in the same method as in Example 1 and evaluation of battery performance was thereto in the same method as in Example 1. The results obtained from the evaluation of physical properties, evaluation of electrode potential, and evaluation of battery performance of the lithium titanate powder according to Example 4 are shown in Table 2.

[Example 5]

Using the lithium titanate powder of Example 3 and as the non-aqueous electrolytic solution for performance evaluation used for the coin battery and laminated battery, using the electrolytic solution, which was prepared by first preparing a nonaqueous solvent in a capacity ratio of "ethylene carbonate (EC):propylene carbonate (PC):methyl ethyl carbonate (MEC):dimethyl carbonate (DMC) = 10:20:20:50" and then dissolving thereto $LiPF_6$ as the electrolyte salt so to become the concentration of 1M, evaluation of battery performances was performed. The results of the evaluation of battery performances are shown in Table 2.

[Example 6]

The lithium titanate powder according to Example 6 was obtained in the same method as in Example 1, except that for raw material preparation, the amount shown in Table 1 was used for the flux amount, calcination was performed by using the maximum temperature during the calcination process and retaining time at the maximum temperature were matched with those shown in Table 1, and more, in the subsequent cooling process, cooling was performed by matching the atmosphere and cooling speed with those shown in Table 1, and then in the same method used in Example 1, evaluation of physical properties was performed. Also, a three-electrode cell to which the lithium titanate powder was applied to the electrode material was manufactured in the same method as in Example 1, and with the cell, evaluation of electrode potential was performed in the same method used in Example 1. Further, a coin-type and laminated-type batteries were manufactured in the same method as in Example 1, and their battery performances were evaluated in the same method as in Example 1. The results obtained from the evaluation of physical properties, evaluation of electrode potential, and evaluation of battery performance of the obtained lithium titanate powder according to Example 6 are shown in Table 2.

[Comparative Example 1]

The lithium titanate powder of Comparative Example 1 was manufactured in the same method as used in Example 1 except that, instead of using completely anatase-type $TiO_2$ (average particle size: 0.6$\mu$m, rutile content: 0

mass%), anatase-type $TiO_2$ (average particle size: 0.6μm, rutile content: 1 mass%) was used and flux was not used, and more, calcination was performed using the obtained mixed powder and for the cooling speed, speed that makes the calcined object temperature to 5°C/min in the cooling process for the calcined object was used. To the obtained lithium titanate powder, measurement of physical properties was performed as in Example 1. More, a three-electrode cell to which the lithium titanate powder was applied to electrode material was manufactured in the same method as in Example 1, and using the cell, evaluation of electrode potential was performed in the same method as used in Example 1. More, a coin-type and laminated-type batteries were manufactured in the same method as in Example 1 and their evaluation of battery performance was performed in the same method as in Example 1. The results obtained from the evaluation of physical properties, evaluation of electrode potential, and evaluation of battery performance of the obtained lithium titanate powder according to Comparative Example 1 are shown in Fig. 1, Fig. 2, and Table 2.

[Comparative Example 2 to Comparative Example 6]

The lithium titanate powder for Comparative Example 2 to Comparative Example 6 was manufactured in the same way as in Comparative Example 1 except that mixed powder with D95 shown in Table 1 was obtained by adjusting process conditions for bead mill milling and mixing in the raw material preparation process, and using the mixed powder, calcination was performed while adjusting the maximum temperature during the calcination process and retaining time of the maximum temperature to the values shown in Table 1, and more, cooling speed and atmosphere for the cooling process for the calcined object were adjusted to the values shown in Table 1. Here, "Air" shown in Table 1 indicates an air atmosphere. To the obtained lithium titanate powder, measurement of physical properties was performed as in Example 1. Also, a three-electrode cell to which the lithium titanate powder was applied to the electrode material was manufactured in the same method used in Example 1, and using the cell, evaluation of electrode potential was performed in the same method as used in Example 1. More, a coin-type and laminated-type batteries were manufactured in the same method as in Example 1 and their evaluation of battery performance was performed in the same method as in Example 1. The results obtained from the evaluation of physical properties, evaluation of electrode potential, and evaluation of battery performance of the obtained lithium titanate powder according to Comparative Example 2 to Comparative Example 6 are shown in Table 2.

As to Comparative Example 6, its results are also shown in Fig. 1 and Fig. 2.

[Comparative Example 7]

The lithium titanate powder for Comparative Example 7 was manufactured by performing ball mill milling using 1 mmφ zirconia ball for six hours to the lithium titanate powder obtained in Example 1. To the obtained lithium titanate powder, measurement of physical properties was performed as in Example 1. Also, a three-electrode cell to which the lithium titanate powder was applied to electrode material was manufactured in the same method as in Example 1. Using the cell, evaluation of electrode potential was performed with the same method as in Example 1. More, a coin-type and laminated-type batteries were manufactured in the same method as in Example 1 and their evaluation of battery performance was performed in the same method as in Example 1. The results obtained from the evaluation of physical properties, evaluation of electrode potential, and evaluation of battery performance of the obtained lithium titanate powder according to Comparative Example 7 are shown in Table 2.

[Comparative Example 8]

$Li_2CO_3$ (average particle size: 2.1 μm) and anatase-type $TiO_2$ (average particle size: 0.6 μm, rutile content: 1 mass%) were weighed so as to become an atomic ratio of Ti to Li of Li/Ti:0.83 and then mixed with a Henschel-type mixer for 20 minutes. In Table 1, D95 calculated from particle size distribution of the obtained mixed powder is shown. The obtained mixed powder was filled up into a high-purity alumina saggar and using a muffle furnace calcined at 900°C for two hours in air atmosphere. The retaining time within the range of 700 to 900°C during heat-up was 60 minutes. Then, inside a muffle furnace, a calcined object was cooled at the cooling speed of 5°C/min. The obtained calcined object was collected and subjected to ball mill milling using 1 mmφ zirconia ball for six hours to manufacture the lithium titanate powder of Comparative Example 8. To the obtained lithium titanate powder, like in Example 1, measurement of physical properties was performed. Then, a three-electrode cell to which the lithium titanate powder was applied to the electrode material was manufactured in the same method as in Example 1, and using the cell, evaluation of electrode potential was performed in the same method as used in Example 1. Further, a coin-type and laminated-type batteries were manufactured in the same method as in Example 1 and evaluation of battery performance thereof was performed in the same method as used in Example 1. The results obtained from the evaluation of physical properties, evaluation of electrode potential, and evaluation of battery performance of the obtained lithium titanate powder according to Comparative Example 8 are shown in Table 2.

[Comparative Example 9]

The lithium titanate powder for Comparative Example 9 was manufactured in the same way as in Comparative Example 8 except that the mixed powder having a D95 shown in Table 1 was obtained by adjusting the process conditions for mixing using a Henschel mixer in the raw material preparation process, and also using the mixed powder, calcination was performed using the maximum temperature during the calcination process and retaining time of the maximum temperature shown in Table 1. To the obtained lithium titanate powder, like in Example 1, measurement of physical properties was performed. Also, a three-electrode cell to which the lithium titanate powder was applied to electrode material was manufactured in the same method as used in Example 1, and using the cell, evaluation of electrode potential was performed in the same method as used in Example 1. Further, a coin-type and laminated-type batteries were manufactured in the same method as in Example 1 and evaluation of battery performance thereof was performed in the same method as used in Example 1. The results obtained from the evaluation of physical properties, evaluation of electrode potential, and evaluation of battery performance of the obtained lithium titanate powder according to Comparative Example 9 are shown in Table 2.

[Comparative Example 10]

$Li_2CO_3$ (average particle size: 2.1 $\mu$m) and anatase-type $TiO_2$ (average particle size: 0.6 $\mu$m, rutile content: 1 mass%) were weighed so as to become an atomic ratio of Ti to Li of Li/Ti:0.83 and then mixed with a Henschel-type mixer for 18 minutes. In Table 1, D95 calculated from particle size distribution of the obtained mixed powder is shown. The obtained mixed powder was filled up into a high-purity alumina saggar and using a muffle furnace calcined at 950°C for six hours in air atmosphere. The retaining time within the range of 700 to 950°C during heat-up was 75 minutes. Then, inside the muffle furnace, a calcined object was cooled at the cooling speed of 5°C/min. The obtained calcined object was collected and subjected to ball mill milling using 1 mm$\varphi$ zirconia ball for six hours to manufacture the lithium titanate powder of Comparative Example 10. To the obtained lithium titanate powder, like in Example 1, measurement of physical properties was performed. Then, a three-electrode cell to which the lithium titanate powder was applied to the electrode material was manufactured in the same method as in Example 1, and using the cell, evaluation of electrode potential was performed in the same method as used in Example 1. Further, a coin-type and laminated-type batteries were manufactured in the same method as in Example 1 and evaluation of battery performance thereof was performed in the same method as used in Example 1. The results obtained from the evaluation of physical properties, evaluation of electrode potential, and evaluation of battery performance of the obtained lithium titanate powder according to Comparative Example 10 are shown in Table 2.

[Comparative Example 11]

The lithium titanate powder for Comparative Example 11 was manufactured in the same way as in Comparative Example 10 except that the mixed powder having a D95 shown in Table 1 was obtained by adjusting the process conditions for mixing using a Henschel mixer in the raw material preparation process, and also using the obtained mixed powder, calcination was performed using the maximum temperature during the calcination process and retaining time of the maximum temperature shown in Table 1 and retaining time of 700 to 850°C temperature range was 45 minutes. To the obtained lithium titanate powder, like in Example 1, measurement of physical properties was performed. Also, a three-electrode cell to which the lithium titanate powder was applied to electrode material was manufactured in the same method as used in Example 1, and using the cell, evaluation of electrode potential was performed in the same method as used in Example 1. Further, a coin-type and laminated-type batteries were manufactured in the same method as in Example 1 and evaluation of battery performance thereof was performed in the same method as used in Example 1. The results obtained from the evaluation of physical properties, evaluation of electrode potential, and evaluation of battery performance of the obtained lithium titanate powder according to Comparative Example 11 are shown in Table 2.

[Comparative Example 12]

$Li_2CO_3$ (average particle size: 4.6 $\mu$m) and anatase-type $TiO_2$ (average particle size: 0.6 $\mu$m, rutile content: 1 mass%) were weighed so as to become an atomic ratio of Ti to Li of Li/Ti:0.80, and added ion exchange water so as to make solid content concentration to 41 mass% and stirred to manufacture a mixed slurry. The mixed slurry was subjected to milling and mixing under the same conditions as used in Example 1 using a bead mill. From the obtained particle size distribution, D95 of the mixed powder after bead mill milling and mixing, that is the mixed powder to be submitted to calcination, was calculated. Its result is shown in Table 1. The obtained mixed slurry was granulated using a spray dryer to manufacture a granulated powder. The granulated powder was filled up into a high-purity alumina saggar, and using a muffle furnace, calcined at 900°C for three hours in the air atmosphere. Following this, inside the muffle furnace, a calcined object was cooled at the cooling speed of 5°C/min. The obtained calcined object was collected and using a grinding machine, calcined granulated powder was milled and sieved (mesh size of 60 μm), and the powder that passed through the sieve was collected. Next, to the collected powder, dry milling was performed for 60 minutes using a vibration mill, using 10mmφ-zirconia beads as a medium and adding ethanol by 0.5 mass%. Then, using a muffle furnace, heat treatment was performed for three hours at 400°C in the air atmosphere to manufacture the lithium titanate powder of the Comparative Example 12. To the obtained lithium titanate powder, like in Example 1, measurement of physical properties was performed. Then, a three-electrode cell to which the lithium titanate powder was applied to the electrode material was manufactured in the same method as in Example 1, and using the cell evaluation of electrode potential was performed in the same method as used in Example 1. Further, a coin-type and laminated-type batteries were manufactured in the same method as in Example 1 and evaluation of battery performance thereof was performed in the same method as used in Example 1. The results obtained from the evaluation of physical properties, evaluation of electrode potential, and evaluation of battery performance of the obtained lithium titanate powder according to Comparative Example 12 are shown in Fig. 1, Fig. 2, and Table 2.

[Comparative Example 13]

$Li_2CO_3$ (average particle size: 4.6 μm) and anatase-type $TiO_2$ (average particle size: 0.6 μm, rutile content: 1 mass%) were weighed so as to become an atomic ratio of Ti to Li of Li/Ti:0.80, and added ion exchange water so as to make solid content concentration to 41 mass% and stirred to manufacture a mixed slurry. The mixed slurry was subjected to milling and mixing under the same conditions as used in Example 1 using a bead mill. From the obtained particle size distribution, D95 of the mixed powder after bead mill milling and mixing, that is the mixed powder to be submitted to calcination, was calculated. Its result is shown in Table 1. The obtained mixed slurry was granulated using a spray dryer to manufacture a granulated powder. The granulated powder was filled up into a high-purity alumina saggar, and using a muffle furnace, calcined at 900°C for three hours in the air atmosphere. Following this, inside the muffle furnace, a calcined object was cooled at the cooling speed of 5°C/min. Then, the calcined object was collected and sieved (mesh size of 45 μm) without deagglomeration and the powder that passed through the sieve was collected to prepare the lithium titanate powder of Comparative Example 13. To the obtained lithium titanate powder, like in Example 1, measurement of physical properties was performed. Then, a three-electrode cell to which the lithium titanate powder was applied to the electrode material was manufactured in the same method as in Example 1 and using the cell, evaluation of electrode potential was performed in the same method as used in Example 1. Further, a coin-type and laminated-type batteries were manufactured in the same method as in Example 1 and evaluation of battery performance thereof was performed in the same method as used in Example 1. The results obtained from the evaluation of physical properties, evaluation of electrode potential, and evaluation of battery performance of the obtained lithium titanate powder according to Comparative Example 13 are shown in Table 2.

In the lithium titanate powder of the first aspect of the present invention, when peak intensity that derives from the (111) plane of $Li_{4/3}Ti_{5/3}O_4$ obtained by the X-ray diffraction measurement is considered as 100, the sum of the peak intensity that derives from the (101) plane of anatase-type titanium dioxide, peak intensity of the (110) plane of rutile-type titanium dioxide, and the value calculated by multiplying 100/80 to the peak intensity of the (-133) plane of $Li_2TiO_3$ (correspond to the peak intensity of the (002) plane of $Li_2TiO_3$) is 1 or less and I/I0 is 5 or more. The battery to which the lithium titanate powder was used as the electrode material has an initial capacity of 168 mAh/g or more, initial charge-discharge efficiency thereof is 99% or more, charge capacity ratio at a current of 50C is 61%, gas generation amount when stored for seven days at 60°C is 8 ml or less, initial charge-discharge capacity and initial charge-discharge efficiency are large, charge rate performance is excellent, and gas generation amount during high-temperature storage is high.

Also, it was found that in the lithium titanate powder of the present invention, in the second aspect, when charge is performed to a three-electrode cell, in which the lithium titanate powder is used as the active material of the evaluation electrode and a Li foil is used to a counter electrode and reference electrode, at a current of 0.1C from a completely discharged state until the potential of the evaluation electrode becomes 1V (vs Li/Li$^+$) at 0°C, a ratio of "the charge capacity of the three-electrode cell from the completely discharged state until the potential of the evaluation electrode lowers to 1.58V" relative to "the charge capacity of the three-electrode cell from the completely discharged state until the potential of the evaluation electrode lowers to 1V" is 3% or less.

Further, to a three-electrode cell, in which the lithium titanate powder of the present invention is used as the active material and a Li foil is used in a counter electrode and reference electrode, when a cycle of charging at a current of 1C until the potential of the evaluation electrode becomes 1V (vs Li/Li$^+$) and discharging at a current of 1C until the potential reaches 2V (vs Li/Li$^+$) was repeated for 100 times at 60°C and then followed by charging at a current of 0.1C from the completely discharged state until the potential becomes 1V (vs Li/Li$^+$) at 25°C are performed, it was also found that a ratio of "the charge capacity of the three-electrode cell from the completely discharged state until the potential of the evaluation electrode lowers to 1.6V" relative to "the charge capacity of the three-electrode cell from the completely discharged state until the potential of the evaluation electrode lowers to 1V" is 3% or less.

[Table 1]

Table 1

| | Lithium titanate powder manufacturing process | | | | | | | | | | | |
| | Preparation of raw material | | | | | Calcination | | | | | Postprocess | |
| | Titanium source | Mixing and milling method | Flux | Dry method | D95 alter mixing and milling | Calcination furnace | Max. temp. | Max. temp. retention time | Cooling speed | Atmosphere of cooling | Milling method | Heat treatment |
| | | | | | [μm] | | [°C] | | [°C/min.] | | | |
| Example 1 | Rutile 0% | Wet bead mill mixing | Boric acid 0.01 mass% | None | 0 75 | Rotary kiln | 900 | 26 min. | 150 | N$_2$ | None | Not performed. |
| Example 2 | Rutile 0% | | Boric acid 0.01 mass% | None | 0.55 | Rotary kiln | 850 | 26 min. | 150 | N$_2$ | None | Not performed. |
| Example 3 | Rutile 0% | | Boric acid 0.01 mass% | None | 0.41 | Rotary kiln | 850 | 7 min. | 150 | N$_2$ | None | Not performed. |
| Example 4 | Rutile | | Not used. | None | 0.41 | Rotary kiln | 850 | 7 min. | 150 | N$_2$ | None | Not performed. |
| Example 5 | Rutile 0% | | Boric acid 0.01 mass% | None | 0.41 | Rotary kiln | 850 | 7 min. | 150 | N$_2$ | None | Not performed. |
| Example 6 | Rutile 0% | Wet bead mill mixing | Boric acid 0.02 mass% | None | 0.75 | Rotary kiln | 950 | 30 min. | 130 | Argon | None | Not performed. |

EP 3 319 153 A1

| | Lithium titanate powder manufacturing process | | | | | | | | | | | |
| | Preparation of raw material | | | | | Calcination | | | | | Postprocess | |
| | Titanium source | Mixing and milling method | Flux | Dry method | D95 alter mixing and milling | Calcination furnace | Max. temp. | Max. temp. retention time | Cooling speed | Atmosphere of cooling | Milling method | Heat treatment |
| | | | | | [μm] | | [°C] | | [°C/min.] | | | |
| Comparative Example 1 | Rutile 1% | Wet bead mill mixing | Not used. | None | 0.75 | Rotary kiln | 900 | 26 min. | 5 | N$_2$ | None | Not performed. |
| Comparative Example 2 | Rutile 1% | | Not used. | None | 0.55 | Rotary kiln | 850 | 26 min. | 5 | N$_1$ | None | Not performed. |
| Comparative Example 3 | Rutile 1% | | Not used. | None | 0.41 | Rotary kiln | 850 | 7 min. | 5 | N$_2$ | None | Not performed. |
| Comparative Example 4 | Rutile 1% | | Not used. | None | 0.41 | Rotary kiln | 850 | 7 min. | 500 | N$_2$ | None | Not performed. |
| Comparative Example 5 | Rutile 1% | | Not used. | None | 0.75 | Rotary kiln | 900 | 26min. | 150 | Air | None | Not performed. |
| Comparative Example 6 | Rutile 1% | | Not used. | None | 0.41 | Rotary kiln | 850 | 7 min. | 150 | Air | None | Not performed. |
| Comparative Example 7 | Rutile 0% | | Boric acid 0.01 mass% | None | 0.75 | Rotary kiln | 900 | 26 min. | 150 | N$_2$ | Ball mill milling | Not performed. |
| Comparative Example 8 | Rutile 1% | Dry mixer mixing | Not used. | None | 6.20 | Muffle furnace | 900 | 2 hrs. | 5 | Air | None | Not performed. |
| Comparative Example 9 | Rutile 1% | | Not used. | None | 9.20 | Muffle furnace | 650 | 12 hrs. | 5 | Air | None | Not performed. |
| Comparative Example 10 | Rutile 1% | | Not used | None | 9.20 | Muffle furnace | 950 | 6 hrs. | 5 | Air | Ball mill milling | Not performed. |
| Comparative Example 11 | Rutile 1% | | Not used. | None | 8.50 | Muffle furnace | 850 | 4hrs. | 5 | Air | Ball mill milling | Not performed. |

(continued)

| | Lithium titanate powder manufacturing process | | | | | | | | | | |
|---|---|---|---|---|---|---|---|---|---|---|---|
| | Preparation of raw material | | | | Calcination | | | | | Postprocess | |
| | Titanium source | Mixing and milling method | Flux | Dry method | D95 after mixing and milling [μm] | Calcination furnace | Max. temp. [°C] | Max. temp. retention time | Cooling speed [°C/min.] | Atmosphere of cooling | Milling method | Heat treatment |
| Comparative Example 12 | Rutile 1% | Wet bead mill mixing | Not used. | Spray dryer | 0.75 | Muffle furnace | 900 | 3 hrs. | 5 | Air | Ball mill milling | 3 hrs. at 400°C |
| Comparative Example 13 | Rutile 1% | | Not used | Spray dryer | 0.75 | Muffle furnace | 650 | 3 hrs. | 5 | Air | None | Not performed. |

[Table 2]

Table 2

| | Lithium titanate powder | | | | | | | | Lithium titanate powder + standard Si powder | Three-electrode cell | | | Battery | | | |
|---|---|---|---|---|---|---|---|---|---|---|---|---|---|---|---|---|
| | Lithium titanate powder | | | | | | | | X-ray diffraction integrated intensity (ratio) | Charge capacity ratio (to 1.6V /to IV) | Charge capacity ratio (to 1.58V /to IV) | Charge capacity ratio after cycle at 60°C (to 1.6V /to IV) | Initial capacity | Initial charge-discharge efficiency | 50C charge rate performance | Amount of gas generation during storage (60°C) |
| | Specific surface area | $D_{BET}$ | X-ray diffraction peak intensity ($Li_4Ti_5O_{12}(111):100$) | | | | $D_X$ | $D_{BET}/D_X$ | | | | | | | | |
| | | | Anatase-type titanium dioxide (101) | Rutile-type titanium dioxide (110) | $Li_2TiO_3$ | | | | LTO(111) /Si(111) | | | | | | | |
| | | | | | (-133) | (002) | | | | | | | | | | |
| | [m²/g] | [nm] | | | | | [nm] | | | 25°C | 0°C | 25°C | [mAh/g] | | | [ml] |
| Example 1 | 7 | 248 | 0 | 0 | 0 | 0 | 201 | 1,2 | 5,3 | 2,8% | 2,9% | 2,8% | 172 | 99% | 61% | 1 |
| Example 2 | 18 | 97 | 0 | 0 | 0 | 0 | 85 | 1,1 | 5,3 | 2,9% | 3,0% | 2,9% | 170 | 99% | 66% | 4 |
| Example 3 | 25 | 70 | 0 | 0 | 0 | 0 | 71 | 1,0 | 5,3 | 2,5% | 2,6% | 2,6% | 169 | 99% | 73% | 5 |
| Example 4 | 24 | 72 | 0,3 | 0 | 0,4 | 0,5 | 70 | 1,0 | 5,1 | 2,9% | 2,9% | 2,9% | 168 | 99% | 67% | 8 |
| Example 5 | 25 | 70 | 0 | 0 | 0 | 0 | 71 | 1,0 | 5,3 | 2,5% | 2,6% | 2,6% | 168 | 99% | 69% | 8 |
| Example 6 | 5,2 | 334 | 0 | 0 | 0 | 0 | 305 | 1,1 | 7,0 | 2,0% | 2,0% | 2,1% | 167 | 99% | 60% | 0,8 |
| Comparative Example 1 | 6,5 | 268 | 0 | 1,7 | 0 | 0 | 245 | 1,1 | 4,8 | 3,6% | 5,0% | 7,0% | 167 | 93% | 40% | 13 |
| Comparative Example 2 | 19 | 92 | 0 | 0 | 0 | 0 | 81 | 1,1 | 4,7 | 5,2% | 6,7% | 9,5% | 166 | 94% | 48% | 18 |
| Comparative Example 3 | 24 | 72 | 0 | 0 | 0 | 0 | 70 | 1,0 | 4,6 | 7,0% | 9,7% | 11,0% | 161 | 87% | 47% | 23 |

(continued)

| | Lithium titanate powder | | | | | | | | Three-electrode cell | | | Battery | | | |
| | Lithium titanate powder | | | | | | | Lithium titanate powder + standard Si powder | Charge capacity ratio (to 1.6V /to IV) | Charge capacity ratio (to 1.58V /to IV) | Charge capacity ratio after cycle at 60°C (to 1.6V /to IV) | Initial capacity | Initial charge-discharge efficiency | 50C charge rate performance | Amount of gas generation during storage (60°C) |
| | Specific surface area | $D_{BET}$ | X-ray diffraction peak intensity ($Li_4Ti_5O_{12}$(111):100) | | | | $D_X$ | $D_{BET}/D_X$ | X-ray diffraction integrated intensity (ratio) | | | | | | | |
| | | | Anatase-type titanium dioxide (101) | Rutile-type titanium dioxide (110) | $Li_2TiO_3$ | | | | LTO(111) /Si(111) | | | | | | | |
| | | | | | (-133) | (002) | | | | | | | | | | |
| | [m²/g] | [nm] | | | | | [nm] | | | 25°C | 0°C | 25°C | [mAh/g] | | | [ml] |
| Comparative Example 4 | 25 | 70 | 0 | 0 | 0 | 0 | 50 | 1,4 | 4,5 | 7,0% | 9,2% | 10,1% | 163 | 93% | 60% | 22 |
| Comparative Example 5 | 6,2 | 281 | 0 | 0,2 | 0 | 0 | 238 | 1,2 | 4,5 | 4,2% | 6,1% | 8,2% | 165 | 93% | 41% | 13 |
| Comparative Example 6 | 24 | 72 | 0 | 0 | 0 | 0 | 41 | 1.8 | 4,8 | 6,0% | 9,2% | 10,9% | 163 | 95% | 60% | 18 |
| Comparative Example 7 | 21 | 83 | 0 | 0 | 0 | 0 | 24 | 3,5 | 2,7 | 20,0% | 30,0% | 29,0% | 155 | 85% | 59% | 25 |
| Comparative Example 8 | 2,8 | 621 | 0 | 0 | 0 | 0 | 193 | 3,2 | 5,0 | 2,7% | 2,9% | 3,1% | 167 | 98% | 10% | 3 |
| Comparative Example 9 | 5,3 | 328 | 0 | 0,5 | 1,6 | 2 | 53 | 6,2 | 3,9 | 7,0% | 9,1% | 9,6% | 158 | 89% | 15% | 20 |
| Comparative Example 10 | 5,5 | 316 | 0 | 0 | 0 | 0 | 92 | 3,4 | 4,6 | 5,0% | 8,5% | 8,8% | 164 | 93% | 21% | 15 |

32

(continued)

| | Lithium titanate powder | | | | | | | | Three-electrode cell | | | Battery | | | |
|---|---|---|---|---|---|---|---|---|---|---|---|---|---|---|---|
| | Lithium titanate powder | | | | | | | Lithium titanate powder + standard Si powder | | | | | | | |
| | Specific surface area | $D_{BET}$ | X-ray diffraction peak intensity ($Li_4Ti_5O_{12}$(111):100) | | | | $D_X$ | $D_{BET}/D_X$ | X-ray diffraction integrated intensity (ratio) | Charge capacity ratio (to 1.6V /to IV) | Charge capacity ratio (to 1.58V /to IV) | Charge capacity ratio after cycle at 60°C (to 1.6V /to IV) | Initial capacity | Initial charge-discharge efficiency | 50C charge rate performance | Amount of gas generation during storage (60°C) |
| | | | Anatase-type titanium dioxide (101) | Rutile-type titanium dioxide (110) | $Li_2TiO_3$ | | | | | | | | | | | |
| | | | | | (-133) | (002) | | | LTO(111) /Si(111) | | | | | | | |
| | [m²/g] | [nm] | | | | | [nm] | | | 25°C | 0°C | 25°C | [mAh/g] | | | [ml] |
| Comparative Example 11 | 5,2 | 334 | 0 | 0 | 0,4 | 0,5 | 105 | 3,2 | 4,3 | 6,0% | 9,3% | 11,5% | 165 | 92% | 28% | 19 |
| Comparative Example 12 | 8,5 | 205 | 0 | 1,2 | 2 | 2,5 | 55 | 3,7 | 4,6 | 2,8% | 4,0% | 5,3% | 159 | 94% | 42% | 12 |
| Comparative Example 13 | 30 | 58 | 0 | 3 | 2,5 | 3,1 | 20 | 2,9 | 3,6 | 5,0% | 9,1% | 10,0% | 155 | 85% | 57% | 18 |

**Claims**

1. A lithium titanate powder for an electrode of an energy storage device comprising $Li_4Ti_5O_{12}$ as a main component, wherein,
   specific surface area determined by a BET method is $5m^2/g$ or more,
   as peak intensity obtained by X-ray diffraction measurement of the lithium titanate powder, when a peak intensity that derives from a (111) plane of $Li_{4/3}Ti_{5/3}O_4$ is considered to be 100, a sum of a peak intensity that derives from a (101) plane of anatase-type titanium dioxide, a peak intensity that derives from a (110) plane of rutile-type titanium dioxide, and a value calculated by multiplying 100/80 to a peak intensity that derives from the (-133) plane of $Li_2TiO_3$ is 1 or less, and
   a ratio I/I0, a ratio of diffraction integrated intensity I of a (111) plane of $Li_4 Ti_5 O_{12}$ to diffraction integrated intensity I0 of a (111) plane of Si, which are obtained by X-ray diffraction measurement of a lithium titanate powder containing a silicon powder obtained by adding the silicon powder (NIST standard reference material 640d) as an internal standard sample to the lithium titanate powder by 10 mass% in outer percentage, is 5 or more.

2. A lithium titanate powder for an electrode of an energy storage device comprising $Li_4Ti_5O_{12}$ as a main component, wherein,
   specific surface area determined by a BET method is $5m^2/g$ or more, and
   to a three-electrode cell where the lithium titanate powder is used as an active material for an evaluation electrode and lithium foil is used for counter electrode and reference electrode, when a charging operation (here, a case where the current flows in a direction Li is absorbed to the evaluation electrode is considered as charge) is performed at a current of 0.1C until potential of the evaluation electrode becomes 1V (vs Li/Li$^+$) at 0°C from a completely discharged state, which is a state where a discharge operation (here, a case where current flows in a direction Li is released from the evaluation electrode is considered as discharge) is performed at a current of 0.1C until potential of the evaluation electrode becomes 2V (vs Li/Li$^+$), a ratio of a charge capacity until the potential of the evaluation electrode lowers to 1.58V (vs Li/Li$^+$) from the completely discharged state relative to a charge capacity until the potential of the evaluation electrode lowers to 1V(vs Li/Li$^+$) from the completely discharged state is 3% or less.

3. A lithium titanate powder for an electrode of an energy storage device comprising $Li_4Ti_5O_{12}$ as a main component, wherein,
   specific surface area determined by a BET method is $5m^2/g$ or more, and
   to a three-electrode cell where the lithium titanate powder is used as an active material for an evaluation electrode and lithium foil is used for counter electrode and reference electrode, when a charging operation (here, a case where current flows in a direction Li is absorbed to the evaluation electrode is considered as charge) is performed at a current of 0.1C until potential of the evaluation electrode becomes 1V (vs Li/Li$^+$) at 25°C from a completely discharged state, which is a state where a discharge operation (here, a case where the current flows in a direction Li is released from the evaluation electrode is considered as discharge) is performed at a current of 0.1C until the potential of the evaluation electrode becomes 2V (vs Li/Li$^+$), after repeating a cycle of charging the three-electrode cell at a current of 1C until the potential of the evaluation electrode becomes 1V (vs Li/Li$^+$) and discharging the three-electrode cell at a current of 1C until the potential of the evaluation electrode becomes 2V (vs Li/Li$^+$) at 60°C for 100 times, a ratio of a charge capacity until the potential of the evaluation electrode lowers to 1.6V (vs Li/Li$^+$) from the completely discharged state relative to a charge capacity until the potential of the evaluation electrode lowers to 1V (vs Li/Li$^+$) from the completely discharged state is 3% or less.

4. The lithium titanate powder for an electrode of an energy storage device according to claim 1 or 3, wherein,
   to a three-electrode cell where the lithium titanate powder is used as an active material for an evaluation electrode and lithium foil is used for counter electrode and reference electrode, when a charging operation (here, a case where the current flows in a direction Li is absorbed to the evaluation electrode is considered as charge) is performed at a current of 0.1C until potential of the evaluation electrode becomes 1V (vs Li/Li$^+$) at 0°C from a completely discharged state, which is a state where a discharge operation (here, a case where current flows in a direction Li is released from the evaluation electrode is considered as discharge) is performed at a current of 0.1C until potential of the evaluation electrode becomes 2V (vs Li/Li$^+$), a ratio of a charge capacity until the potential of the evaluation electrode lowers to 1.58V (vs Li/Li$^+$) from the completely discharged state relative to a charge capacity until the potential of the evaluation electrode lowers to 1V(vs Li/Li$^+$) from the completely discharged state is 3% or less.

5. The lithium titanate powder for an electrode of an energy storage device according to claim 1 or 2, wherein,
   to a three-electrode cell where the lithium titanate powder is used as an active material for an evaluation electrode and lithium foil is used for counter electrode and reference electrode, when a charging operation (here, a case where current flows in a direction Li is absorbed to the evaluation electrode is considered as charge) is performed at a current of 0.1C until potential of the evaluation electrode becomes 1V (vs Li/Li$^+$) at 25°C from a completely discharged state, which is a state where a discharge operation (here, a case where the current flows in a direction Li is released from the evaluation electrode is considered as discharge) is performed at a current of 0.1C until the potential of the evaluation electrode becomes 2V (vs Li/Li$^+$), after repeating a cycle of charging the three-electrode cell at a current of 1C until the potential of the evaluation electrode becomes 1V (vs Li/Li$^+$) and discharging the three-electrode cell at a current of 1C until the potential of the evaluation electrode becomes 2V (vs Li/Li$^+$) at 60°C for 100 times, a ratio of a charge capacity until the potential of the evaluation electrode lowers to 1.6V (vs Li/Li$^+$) from the completely discharged state relative to a charge capacity until the potential of the evaluation electrode lowers to 1V (vs Li/Li$^+$) from the completely discharged state is 3% or less.

6. The lithium titanate powder for an electrode of an energy storage device according to any one of claims 1 to 5, wherein specific surface area determined by a BET method is 20 m$^2$/g or more.

7. The lithium titanate powder for an electrode of an energy storage device according to any one of claims 1 to 6, wherein a crystallite diameter $D_X$ calculated from a half-peak width of a (111) plane of $Li_4 Ti_5 O_{12}$ by a Scherrer equation is 70 nm or more.

8. The lithium titanate powder for an electrode of an energy storage device according to claim 7, wherein when a volume surface diameter calculated from specific surface area determined by a BET method is considered to be $D_{BET}$, a ratio of the volume surface diameter $D_{BET}$ to the crystallite diameter $D_X$, $D_{BET}/D_X$ ($\mu$m/$\mu$m), is 2 or less.

9. An active material comprising the lithium titanate powder for an electrode of an energy storage device according to any one of claims 1 to 8.

10. An electrode sheet for an energy storage device comprising the active material according to claim 9.

11. An energy storage device comprising the electrode sheet according to claim 10.

12. A lithium-ion secondary battery comprising the active material according to claim 9.

13. A hybrid capacitor comprising the active material according to claim 9.

14. The energy storage device according to claim 11, wherein a non-aqueous electrolyte solution where electrolyte salt including at least one kind of lithium salt selected from $LiPF_6$, $LiBF_4$, $LiPO_2F_2$, and $LiN(SO_2F)_2$ is dissolved to a nonaqueous solvent including one kind or more cyclic carbonates selected from ethylene carbonate, propylene carbonate, 1,2-butylene carbonate, 2,3-butylene carbonate, 4-fluoro-1,3-dioxolane-2-one, and 4-ethynyl-1,3-dioxolane-2-one is used.

15. The energy storage device according to claim 14, wherein
the non-aqueous electrolyte solution has a concentration of all electrolyte salts of 0.5M or more and 2.0M or less, includes at least $LiPF_6$ as electrolyte salt, and further includes at least one kind of lithium salt selected from $LiBF_4$, $LiPO_2F_2$, and $LiN(SO_2F)_2$ within a range of 0.01M or more and 0.4M or less.

16. The energy storage device according to claim 14 or 15, wherein
the nonaqueous solvent further includes one or more kinds of symmetrically chain carbonates selected from dimethyl carbonate, diethyl carbonate, dipropyl carbonate, and dibutyl carbonate, and one or more kinds of asymmetrically chain carbonates selected from methyl ethyl carbonate, methyl propyl carbonate, methyl isopropyl carbonate, methyl butyl carbonate, and ethyl propyl carbonate.

Fig. 1

Fig. 2

## INTERNATIONAL SEARCH REPORT

| International application No. |
|---|
| PCT/JP2016/069490 |

**A. CLASSIFICATION OF SUBJECT MATTER**
*H01M4/485*(2010.01)i, *H01G11/06*(2013.01)i, *H01G11/46*(2013.01)i, *H01G11/60* (2013.01)i, *H01G11/62*(2013.01)i, *H01M10/0525*(2010.01)i, *H01M10/0568* (2010.01)i, *H01M10/0569*(2010.01)i
According to International Patent Classification (IPC) or to both national classification and IPC

**B. FIELDS SEARCHED**

Minimum documentation searched (classification system followed by classification symbols)
H01M4/485, H01G11/06, H01G11/46, H01G11/60, H01G11/62, H01M10/0525, H01M10/0568, H01M10/0569

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2014-19617 A (National Institute of Advanced Industrial Science and Technology), 03 February 2014 (03.02.2014), paragraphs [0025] to [0030] (Family: none) | 1-6<br>7-16 |
| X<br>Y | JP 2012-248333 A (Ishihara Sangyo Kaisha, Ltd.), 13 December 2012 (13.12.2012), paragraphs [0043] to [0045] (Family: none) | 1-6<br>7-16 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 23 September 2016 (23.09.16) | 04 October 2016 (04.10.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2016/069490 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2012-69432 A  (Toda Kogyo Corp.),<br>05 April 2012 (05.04.2012),<br>paragraphs [0046] to [0049]; table 1<br>& US 2013/0244114 A1<br>paragraphs [0262] to [0265]; table 4<br>& US 2016/0164086 A1     & WO 2012/029697 A1<br>& EP 2612840 A1          & TW 201226320 A<br>& CA 2809511 A1          & CN 103080010 A<br>& KR 10-2013-0097733 A | 1-6<br>7-16 |
| X<br>Y | JP 2011-111361 A  (The Nippon Chemical<br>Industrial Co., Ltd.),<br>09 June 2011 (09.06.2011),<br>paragraphs [0044] to [0045]; table 3<br>& US 2011/0121226 A1<br>paragraphs [0075] to [0079]; table 3<br>& EP 2328212 A1 | 1-6<br>7-16 |
| Y | WO 2015/030192 A1  (Ube Industries, Ltd.),<br>05 March 2015 (05.03.2015),<br>paragraphs [0081] to [0084], [0092] to [0096],<br>[0119] to [0134]<br>& US 2016/0204433 A1<br>paragraphs [0088] to [0092], [0100] to [0104],<br>[0137] to [0153]<br>& JP 5690029 B1          & JP 2016-681 A<br>& JP 2016-1591 A         & JP 2016-6777 A<br>& WO 2015/178457 A1     & KR 10-2016-0048184 A | 7-16 |
| A | JP 2014-24723 A  (Toho Titanium Co., Ltd.),<br>06 February 2014 (06.02.2014),<br>(Family: none) | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013129423 A
- JP 2013095646 A
- JP 5690029 A
- JP 2014024723 A
- JP 2005142047 A